# EUROPEAN PATENT APPLICATION

(11) **EP 4 783 556 A1**
(43) Date of publication of application: **29.07.2026**
(21) Application number: 24894339.1
(22) Date of filing: 13.09.2024
(51) Int. Cl.: H04L 67/75, H04W 4/80, H04M 1/72412

(54) **ELECTRONIC DEVICE, METHOD, AND NON-TRANSITORY COMPUTER-READABLE STORAGE MEDIUM FOR CONTROLLING TRANSMISSION OF PACKET FOR AUDIO OUTPUT**

(30) Priority: 20.11.2023 KR 20230160590; 01.12.2023 KR 20230172717
(71) Applicant: Samsung Electronics Co., Ltd., Suwon-si, Gyeonggi-do 16677 (KR)
(72) Inventor: CHEONG, Gupil, Suwon-si Gyeonggi-do 16677 (KR); KANG, Doosuk, Suwon-si Gyeonggi-do 16677 (KR); KIM, Jinho, Suwon-si Gyeonggi-do 16677 (KR); YOON, Heejae, Suwon-si Gyeonggi-do 16677 (KR); HWANG, Sungpill, Suwon-si Gyeonggi-do 16677 (KR)
(74) Representative: Gulde & Partner
(86) International application number: PCT/KR2024/014030
(87) International publication number: WO 2025/110443

(57) **Abstract**

An electronic device in a wireless environment is described. The electronic device may comprise a communication circuit for Bluetooth, and a memory. The memory may store: instructions for controlling the communication circuit to, for an output of a first audio, first transmit a first packet including data necessary for the output of the first audio via a communication link between an external electronic device and the electronic device; instructions for controlling the communication circuit to transmit a second packet including data optional for the output of the first audio among one or more remaining packets of a first set; and instructions for controlling the communication circuit to, for an output of a second audio subsequent to the first audio, transmit, using the communication circuit, a third packet including data necessary for the output of the second audio among a second set of packets to be sequentially transmitted to the external electronic device via the communication link.

## Description

### [Technical Field]

The following descriptions relate to an electronic device, a method, and a non-transitory computer-readable storage medium for controlling transmission of a packet for an output of audio.

### [Background Art]

Bluetooth^{®} (or legacy Bluetooth^{®} (or classic Bluetooth)) is a short-range wireless technology standard used for data exchange between electronic devices. Bluetooth may be provided on an industrial, scientific, and medical (ISM) radio band. For example, Bluetooth may be used to exchange text information, voice information, and/or audio information through wireless communication between electronic devices.

The above-described information may be provided as a related art for the purpose of helping to understand the present disclosure. No claim or determination is raised as to whether any of the above-described information may be applied as a prior art related to the present disclosure.

### [Disclosure]

### [Technical Solution]

An electronic device in a wireless environment is described. The electronic device may comprise communication circuitry for Bluetooth. The electronic device may comprise memory. The memory may store instructions for controlling the communication circuitry to first transmit, from among packets of a first set to be sequentially transmitted for an output of first audio through a communication link between the electronic device and an external electronic device to the external electronic device, a first packet including data mandatory for the output of the first audio. The memory may store instructions for controlling the communication circuitry to, based on receiving, before a usable time for the transmission of the first packet and one or more retransmissions of the first packet elapses, an acknowledgement (ACK) packet regarding the first packet from the external electronic device, transmit, from among one or more remaining packets of the first set, a second packet including data optional for the output of the first audio. The memory may store instructions for controlling the communication circuitry to, based on not receiving, until the time has elapsed, the ACK packet from the external electronic device, cancel transmitting the packets of the first set and transmit, by using the communication circuitry, from among packets of a second set to be sequentially transmitted for an output of second audio next to the first audio through the communication link to the external electronic device, a third packet including data mandatory for the output of the second audio.

A method is described. The method may be executed in an electronic device in a wireless environment with communication circuitry for Bluetooth. The method may comprise first transmitting, by using the communication circuitry, from among packets of a first set to be sequentially transmitted for an output of first audio through a communication link between the electronic device and an external electronic device to the external electronic device, a first packet including data mandatory for the output of the first audio. The method may comprise, based on receiving, before a usable time for the transmission of the first packet and one or more retransmissions of the first packet elapses, an acknowledgement (ACK) packet regarding the first packet from the external electronic device, transmitting, by using the communication circuitry, from among one or more remaining packets of the first set, a second packet including data optional for the output of the first audio. The method may comprise, based on not receiving, until the time has elapsed, the ACK packet from the external electronic device, cancelling transmitting the packets of the first set, and transmitting, by using the communication circuitry, from among packets of a second set to be sequentially transmitted for an output of second audio next to the first audio through the communication link to the external electronic device, a third packet including data mandatory for the output of the second audio.

A non-transitory computer-readable storage medium is described. The non-transitory computer-readable storage medium may store one or more programs. The one or more programs may comprise instructions, when executed by an electronic device with communication circuitry for Bluetooth, causing the electronic device to first transmit, by using the communication circuitry, from among packets of a first set to be sequentially transmitted for an output of first audio through a communication link between the electronic device and an external electronic device to the external electronic device, a first packet including data mandatory for the output of the first audio. The one or more programs may comprise instructions, when executed by the electronic device, causing the electronic device to, based on receiving, before a usable time for the transmission of the first packet and one or more retransmissions of the first packet elapses, an acknowledgement (ACK) packet regarding the first packet from the external electronic device, transmit, by using the communication circuitry, from among one or more remaining packets of the first set, a second packet including data optional for the output of the first audio. The one or more programs may comprise instructions, when executed by the electronic device, causing the electronic device to, based on not receiving, until the time has elapsed, the ACK packet from the external electronic device, cancel transmitting the packets of the first set, and transmit, by using the communication circuitry, from among packets of a second set to be sequentially transmitted for an output of second audio next to the first audio through the communication link to the external electronic device, a third packet including data mandatory for the output of the second audio.

### [Description of the Drawings]

FIG. 1 illustrates an example of a wireless environment including an electronic device and an external electronic device.
FIG. 2 is a simplified block diagram of an exemplary electronic device.
FIG. 3 is a flowchart illustrating an exemplary method executed in an electronic device for controlling transmission of a packet for an output of audio.
FIG. 4 is a flowchart illustrating an exemplary method executed in an electronic device for using information determined to control transmission of a packet for an output of audio.
FIG. 5 illustrates an exemplary method of generating service data units (SDUs) used for generating packets to be transmitted to an external electronic device.
FIG. 6 illustrates an exemplary method of storing SDUs in a buffer.
FIG. 7 is a flowchart illustrating an exemplary method executed in an electronic device for adaptively changing another packet for transmission to an external electronic device according to a reception state of a packet transmitted to the external electronic device.
FIGS. 8 to 11 illustrate an exemplary method of adaptively changing another packet for transmission to an external electronic device according to a reception state of a packet transmitted to the external electronic device.
FIGS. 12 to 14 illustrate an exemplary method of transmitting an acknowledgement packet and a non-acknowledgement packet to an electronic device.
FIGS. 15 to 18 illustrate an exemplary method of controlling a buffer for adaptively changing another packet for transmission to an external electronic device according to a reception state of a packet transmitted to the external electronic device.
FIG. 19 illustrates an exemplary method of decoding packets received from an electronic device in an external electronic device.
FIG. 20 is a block diagram of an electronic device in a network environment, according to various embodiments.

### [Mode for Invention]

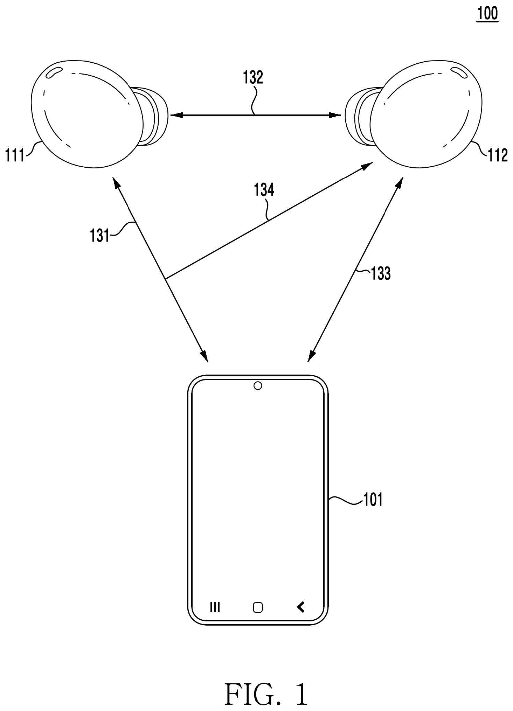

FIG. 1 illustrates an example of a wireless environment including an electronic device and an external electronic device.

Referring to FIG. 1, a wireless environment 100 may include an electronic device 101 and an external electronic device 111

The electronic device 101 may be a device that transmits a packet to the external electronic device 111 to output audio by using the external electronic device 111. The electronic device 101 may be a device that receives one or more user inputs caused to output audio by using the external electronic device 111. As a non-limiting example, unlike the external electronic device 111, the electronic device 101 may include a display for displaying visual information and receiving a touch input. The electronic device 101 may operate as an audio source device in the wireless environment 100. The electronic device 101 may operate as a central device in the wireless environment 100.

The electronic device 101 may establish, with the external electronic device 111, a communication link 131 between the electronic device 101 and the external electronic device 111 for communication with the external electronic device 111. For example, the electronic device 101 may transmit packets to the external electronic device 111 through the communication link 131 to output audio by using the external electronic device 111. As a non-limiting example, an output of the audio (or streaming of the audio) may be provided through an advanced audio distribution profile (A2DP). As a non-limiting example, the communication link 131 may include an asynchronous connection-less (ACL) link.

The electronic device 101 may be a portable electronic device (or a mobile electronic device), such as a smartphone, a tablet device, or a laptop computer. However, it is not limited thereto. The electronic device 101 may be a (mainly) fixed electronic device, such as a desktop computer or a stationary audio output device (e.g., an audio player including a digital-analog-converter (DAC)).

The external electronic device 111 may be a device that outputs audio by using a packet received from the electronic device 101 through the communication link 131. The external electronic device 111 may include communication circuitry for receiving the packet. The communication circuitry may include communication circuitry for Bluetooth. The external electronic device 111 may be a device that decodes the packet or data obtained from the packet to output the audio. The external electronic device 111 may include a speaker for outputting the audio. The external electronic device 111 may operate as an audio sink device in the wireless environment 100. The external electronic device 111 may operate as a peripheral device in the wireless environment 100.

For example, the external electronic device 111 may establish a communication link 131 with the electronic device 101. As a non-limiting example, the communication link 131 may be established based on a connection request transmitted from the external electronic device 111 to the electronic device 101 based on recognizing that a state of a door of a device usable for charging a rechargeable battery of the external electronic device 111 is changed from a close state to an open state while the device (e.g., cradle) accommodates the external electronic device 111. As a non-limiting example, the communication link 131 may be established based on a packet advertised from the external electronic device 111 based on recognizing that the state of the door of the device usable for charging the rechargeable battery of the external electronic device 111 is changed from the close state to the open state while the device accommodates the external electronic device 111. For example, the external electronic device 111 may receive packets for an output of audio from the electronic device 101 through the communication link 131. For example, the external electronic device 111 may output audio based on decoding the packets or data obtained from the packets.

The external electronic device 111 may be a wearable electronic device, such as an earphone or a headphone. However, it is not limited thereto. The external electronic device 111 may be a device mounted on an object, such as a portable amplifier (or speaker) or a stationary amplifier.

The wireless environment 100 may further include another external electronic device 112. For example, the another external electronic device 112 may be identical to or similar to the external electronic device 111. As a non-limiting example, the another external electronic device 112 may be paired with the external electronic device 111. For example, audio outputted through the external electronic device 111 and audio outputted through the another external electronic device 112 may provide stereophonic sound. For example, the another external electronic device 112 may establish, with the external electronic device 111, a communication link 132 between the external electronic device 111 and the another external electronic device 112. As a non-limiting example, the communication link 132 may be established based on recognizing that a state of a door of a device usable for charging a rechargeable battery of each of the external electronic device 111 and the another external electronic device 112 is changed from a close state to an open state while the device (e.g., cradle) accommodates the external electronic device 111 and the another external electronic device 112. For example, in a relationship between the external electronic device 111 and the another external electronic device 112, the external electronic device 111 may have a primary role and the another external electronic device 112 may have a secondary role. However, it is not limited thereto. For example, according to a state of a battery of the external electronic device 111 and/or a state of a battery of the another external electronic device 112, the another external electronic device 112 may have a primary role and the external electronic device 111 may have a secondary role.

As a non-limiting example, the another external electronic device 112 having a secondary role may monitor, check, recognize, or sniff a communication link 131 (or a state of the communication link 131), as indicated by an arrow 134, by using connection information of the communication link 131 received from the external electronic device 111 through the communication link 132. For example, the another external electronic device 112 may obtain packets transmitted from the electronic device 101 to the external electronic device 111 through the communication link 131 for outputting audio, according to the sniffing. For example, the another external electronic device 112 may decode the packets or data obtained from the packets. For example, the another external electronic device 112 may output audio based on the data. However, it is not limited thereto. For example, the another external electronic device 112 may output audio based on receiving, from the external electronic device 111 through the communication link 132, at least a portion of packets provided from the electronic device 101 to the external electronic device 111 through the communication link 131. As another example, the another external electronic device 112 may output audio based on receiving packets transmitted from the electronic device 101 through a communication link 133 between the electronic device 101 and the another external electronic device 112 for outputting audio.

Operations for signaling between the electronic device 101 and the external electronic device 111 exemplified below may also be applied to operations for signaling between the electronic device 101 and the another external electronic device 112.

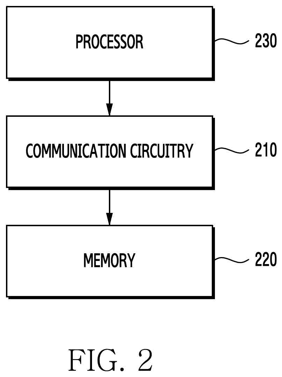

As a non-limiting example, the electronic device 101 may schedule transmitting packets to the external electronic device 111 through the communication link 131 to output audio from the external electronic device 111 through A2DP. For example, the electronic device 101 may transmit, to the external electronic device 111 through the communication link 131, a packet among the packets. The packet may be successfully received by the external electronic device 111, or may not be successfully received by the external electronic device 111. For example, in a case that a failure of reception of the packet occurs, the external electronic device 111 may transmit a non-acknowledgement packet to the electronic device 101 through the communication link 131 or may not transmit an acknowledgment packet to the electronic device 101 through the communication link 131. For example, in a case that a flush timeout value of the packet is infinite, the electronic device 101 may continuously execute retransmission of the packet until recognizing that the packet is successfully received by the external electronic device 111. For example, in a case that a priority of another packet among the packets is higher than a priority of the packet, transmitting the another packet to the external electronic device 111 through the communication link 131 may not even be attempted due to continuously executing the retransmission of the packet. For example, since continuously executing the retransmission of the packet may deprive the another packet of an opportunity for transmission, a method of providing more transmission opportunities to a packet having a higher priority may be required in the wireless environment 100. The method may be implemented through components of the electronic device 101. The components are exemplified in the description of FIG. 2.

FIG. 2 is a simplified block diagram of an exemplary electronic device.

Referring to FIG. 2, the electronic device 101 may include a processor 210, memory 220, and communication circuitry 230.

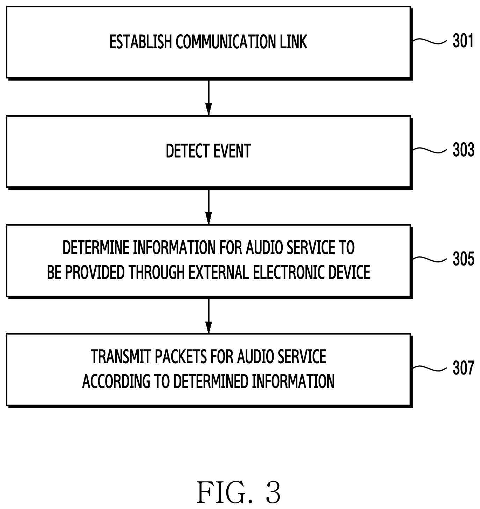

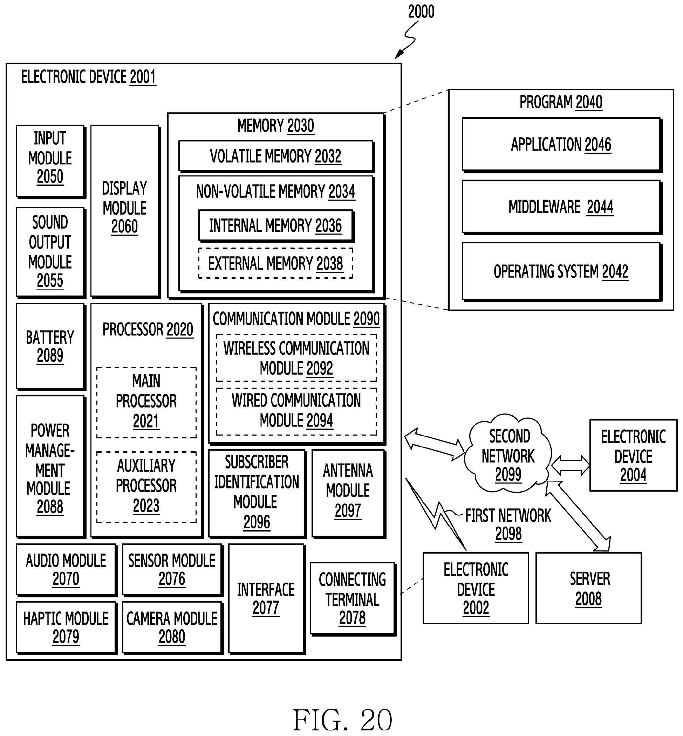

The processor 210 may be used to execute operations of the electronic device 101 exemplified in descriptions of FIGS. 3 to 19. For example, the processor 210 may include at least a portion of a processor 2020 of FIG. 20 or may correspond to at least a portion of the processor 2020 of FIG. 20. For example, the processor 210 may include one or more processors including an application processor (AP) and/or a communication processor (CP). For example, the processor 210 may be implemented as a single chip, such as a system on chip (SoC), or may be implemented as multiple chips. For example, the processor 210 may be implemented as an integrated circuit (or integrated circuitry) or may be implemented as multiple integrated circuits. For example, the processor 210 may be arranged in a distributed manner within the electronic device 101.

The memory 220 may (at least temporarily) store instructions for executing operations of the electronic device 101 exemplified in the descriptions of FIGS. 3 to 19. The instructions may be executed by the processor 210. The instructions may be included in one or more programs stored in the memory 220. For example, the memory 220 may include at least a portion of memory 2030 of FIG. 20 (or at least a portion of a non-volatile memory 2034) or may correspond to at least a portion of the memory 2030 of FIG. 20 (or at least a portion of the non-volatile memory 2034). For example, the memory 220 may include a main memory within the electronic device 101 (e.g., a random access memory (RAM), a register for the processor 210, a cache for the processor 210, a register for the communication circuitry 230, a buffer (or a soft buffer) for the communication circuitry 230, and/or an auxiliary memory (e.g., a hard disk drive (HDD), a solid state drive (SSD)) of the electronic device 101). For example, the memory 220 may be implemented as a single chip or may be implemented as multiple chips. For example, the memory 220 may be implemented as an integrated circuit or may be implemented as multiple integrated circuits. For example, the memory 220 may be arranged in a distributed manner within the electronic device 101.

The communication circuitry 230 may be used to support Bluetooth communication (e.g., legacy Bluetooth communication (or classic Bluetooth communication)) between the electronic device 101 and another electronic device (e.g., the external electronic device 111) and/or Bluetooth low energy (BLE). For example, the communication circuitry 230 may include at least a portion of a communication module 2090 of FIG. 20 (or a wireless communication module 2092) or may correspond to at least a portion of the communication module 2090 of FIG. 20 (or the wireless communication module 2092). For example, the communication circuitry 230 may include communication circuitry for Bluetooth. For example, the communication circuitry 230 may be used to establish a communication link 131. For example, the communication circuitry 230 may be used to transmit a packet to the external electronic device 111 through the communication link 131. For example, the communication circuitry 230 may be used to receive a packet from the external electronic device 111 through the communication link 131. For example, the communication circuitry 230 may be used to further support another communication scheme (e.g., a wireless fidelity (Wi-Fi) communication scheme) distinguished from the Bluetooth communication scheme. For example, the communication circuitry 230 may be implemented as a single chip or may be implemented as multiple chips. For example, the communication circuitry 230 may be implemented as an integrated circuit or may be implemented as multiple integrated circuits. For example, the communication circuitry 230 may be arranged in a distributed manner within the electronic device 101.

The components of the electronic device 101 exemplified above may be used to execute (or perform) operations of the electronic device 101 exemplified in the descriptions of FIGS. 3 to 19.

FIG. 3 is a flowchart illustrating an exemplary method executed in an electronic device for controlling transmission of a packet for an output of audio.

Referring to FIG. 3, in operation 301, the electronic device 101 may establish a communication link 131 with the external electronic device 111. For example, operation 301 may be executed by executing instructions stored in the memory 220. For example, the instructions may be executed by the processor 210. For example, operation 301 may be executed by using the communication circuitry 230. As a non-limiting example, operation 301 may be executed according to a method exemplified in the description of FIG. 1.

In operation 303, the electronic device 101 may detect an event. For example, operation 303 may be executed by executing instructions stored in the memory 220. For example, the instructions may be executed by the processor 210.

The event may indicate an event that causes execution of operation 305 and/or operation 307. The event may be defined in the electronic device 101 to execute transmission (or differential transmission) (or adaptive transmission) (or selective transmission) executed in operation 307 by using information determined (or obtained) (or identified) (or generated) (or scheduled) in operation 305.

For example, the event may include receiving (or recognizing) (or identifying) (or checking) (or obtaining) a user request (e.g., a request to output lossless audio by using the external electronic device 111). As a non-limiting example, the event may include receiving a touch input on an executable object (e.g., an executable object in a user interface of a software application for music playback) indicating playing music set to output lossless audio while the communication link 131 is maintained. As a non-limiting example, the event may include recognizing (or identifying) (or obtaining) a voice command (e.g., "play music") received through a microphone of the electronic device 101 while the communication link 131 is maintained.

For example, the event may include receiving a user input for executing a software application for music playback. As a non-limiting example, the event may include receiving a touch input on an icon (or an item) (or an object) (or an executable object) indicating the software application while the communication link 131 is maintained. As a non-limiting example, the event may include receiving (or recognizing) (or identifying) (or obtaining) a voice command (e.g., "execute Samsung Music") indicating execution of the software application through a microphone of the electronic device 101 while the communication link 131 is maintained.

For example, the event may include receiving (or recognizing) (or checking) (or identifying) (or obtaining) a request from the external electronic device 111 (or the another external electronic device 112). As a non-limiting example, the event may include receiving the request transmitted from the external electronic device 111 through the communication link 131 in response to a user input of pressing a button exposed through a portion of a housing of the external electronic device 111 (or a user input on a touch area formed on the housing of the external electronic device 111). As a non-limiting example, the event may include receiving the request transmitted from the external electronic device 111 through the communication link 131 in response to a voice command (e.g., "play music") obtained through a microphone of the external electronic device 111.

For example, the event may include recognizing (or checking) (or identifying) a change of a state of the wireless environment 100. As a non-limiting example, the event may include recognizing that a state of the communication link 131 is changed. As a non-limiting example, the event may include checking a decrease of a reception rate of a packet transmitted through the communication link 131.

In operation 305, the electronic device 101 may determine (or identify) (or obtain) (or define), based on the event (or in response to the event), information for an audio service to be provided through the external electronic device 111. For example, operation 305 may be executed by executing instructions stored in the memory 220. For example, the instructions may be executed by the processor 210. For example, the information determined in operation 305 may be transmitted from the electronic device 101 to the external electronic device 111 through the communication link 131. However, it is not limited thereto.

For example, the information for the audio service determined in operation 305 may include information regarding a codec used (or to be used) for the audio service, information regarding the number of packets of a set (or a single set) for an output of audio to be transmitted to the external electronic device 111 for the audio service (or information regarding the number of service data units (SDUs) of a set for respectively generating packets of a set for an output of audio to be transmitted to the external electronic device 111 for the audio service) (or information regarding the number of groups respectively including packets of a set (or SDUs of a set) for an output of audio to be transmitted to the external electronic device 111 for the audio service), information regarding a size of each of packets of a set (or SDUs of a set) for an output of audio to be transmitted to the external electronic device 111 for the audio service (or information regarding a bit rate of each of packets of a set (or SDUs of a set) for an output of audio to be transmitted to the external electronic device 111 for the audio service), information regarding a usable time (or a maximum time) (e.g., a flush timeout value and/or a maximum retransmission number (or count)) for transmission (and/or one or more retransmissions) of each of packets of a set for an output of audio to be transmitted to the external electronic device 111 for the audio service (or information regarding a usable time for transmission of each of packets included in each of the groups), and/or information regarding a method of decoding packets to be transmitted to the external electronic device 111 for the audio service.

For example, packets of a set for an output of audio to be transmitted to the external electronic device 111 for the audio service may have different priorities. For example, a first packet among the packets of the set may have a first priority, and a second packet among the packets of the set may have a second priority. For example, the first packet among the packets of the set may include data mandatory (or essential) for the output of the audio, and the second packet among the packets of the set may include data optional for the output of the audio. For example, in a case that the external electronic device 111 does not receive the first packet among the packets of the set from the electronic device 101, the external electronic device 111 may not output the audio even when receiving one or more remaining packets (e.g., including the second packet) among the packets of the set from the electronic device 101. For example, the first packet among the packets of the set may include data (or core audio data) required (or mandatorily required) for restoration of the audio stored (or at least temporarily stored) in the electronic device 101, and the second packet among the packets of the set may include data (or extension data) (e.g., data for additional sound quality improvement and/or additional sound field effects) for enhancing quality of the audio outputted through the external electronic device 111.

In operation 307, the electronic device 101 may transmit, to the external electronic device 111 through the communication link 131, packets for the audio service according to the information determined in operation 305. For example, operation 307 may be executed by executing instructions stored in the memory 220. For example, the instructions may be executed by the processor 210. For example, operation 307 may be executed by using the communication circuitry 230.

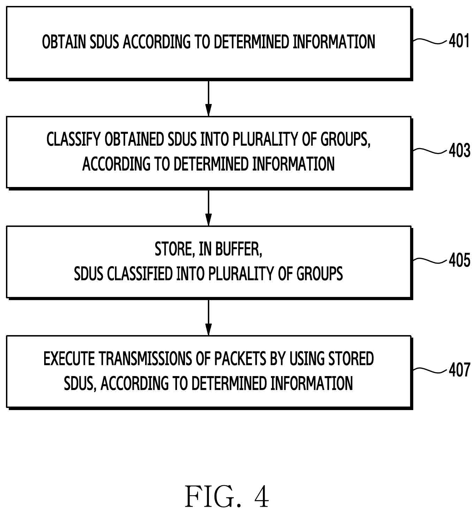

For example, the electronic device 101 may execute differential transmission (or selective transmission) (or adaptive transmission) to the external electronic device 111 for the audio service, through operations exemplified in the descriptions of FIGS. 4 to 19. For example, the electronic device 101 may execute the differential transmission such that, a packet having a first priority among packets of a set for an output of audio to be transmitted to the external electronic device 111 for the audio service has more transmission opportunities than a transmission opportunity of another packet having a second priority lower than the first priority among the packets of the set. For example, the electronic device 101 may classify SDUs for generating packets to be transmitted to the external electronic device 111 for the audio service into a plurality of groups, and may execute the differential transmission such that packets respectively obtained from SDUs in a first group having a first priority among the plurality of groups have more transmission opportunities than transmission opportunities of packets respectively obtained from SDUs in a second group having a second priority lower than the first priority among the plurality of groups. The differential transmission is exemplified in more detail in the description of FIG. 4.

FIG. 4 is a flowchart illustrating an exemplary method executed in an electronic device for using information determined to control transmission of a packet for an output of audio.

Referring to FIG. 4, in operation 401, the electronic device 101 may obtain SDUs according to the information for the audio service determined in operation 305. For example, operation 401 may be executed by executing instructions stored in the memory 220. For example, the instructions may be executed by the processor 210.

For example, the electronic device 101 may obtain (or generate) encoded data by encoding data regarding an audio source in the electronic device 101 by using a codec (e.g., the codec exemplified in the description of operation 305) for the audio service. For example, the encoded data may include data (e.g., core data) mandatory for an output of audio and data (e.g., extension data (or residual data)) auxiliary for an output of audio. For example, the electronic device 101 may obtain the SDUs from the encoded data.

In operation 403, the electronic device 101 may classify the SDUs obtained in operation 401 into a plurality of groups, according to the information for the audio service determined in operation 305. For example, operation 403 may be executed by executing instructions stored in the memory 220. For example, the instructions may be executed by the processor 210.

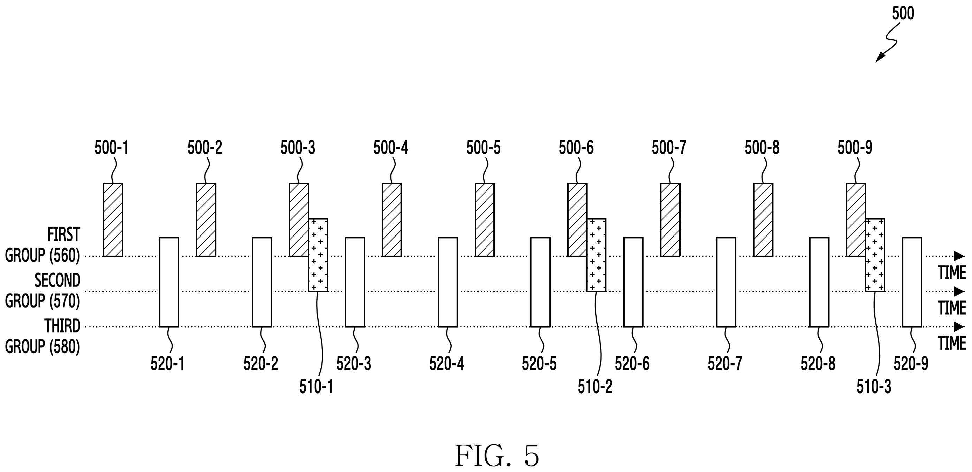

For example, a first group among the plurality of groups may have a first priority. For example, a second group among the plurality of groups may have a second priority lower than the first priority. For example, a portion of the SDUs including data mandatory for an output of audio may be classified into the first group, and another portion of the SDUs including data auxiliary for an output of audio may be classified into the second group. Classifying the SDUs into the plurality of groups in operation 403 is exemplified in the description of FIG. 5.

FIG. 5 illustrates an exemplary method of generating service data units (SDUs) used for generating packets to be transmitted to an external electronic device.

Referring to FIG. 5, a chart 500 illustrates a method of classifying obtained SDUs into a plurality of groups. A horizontal axis of the chart 500 indicates time.

For example, the plurality of groups may include a first group 560 for SDUs having a first priority, a second group 570 for SDUs having a second priority lower than the first priority, and a third group 580 for SDUs having a third priority lower than the second priority.

For example, based on obtaining an SDU 500-1 including data mandatory for an output of first audio, the electronic device 101 may classify the SDU 500-1 into a first group 560 (or may include the SDU 500-1 in the first group 560). For example, based on obtaining an SDU 520-1 including data auxiliary for an output of the first audio after classifying the SDU 500-1 into the first group 560 (or after obtaining the SDU 500-1), the electronic device 101 may classify the SDU 520-1 into a third group 580. As a non-limiting example, the data in the SDU 520-1 may be usable for applying an effect (e.g., sound quality improvement and/or sound field effect) to the first audio.

For example, based on obtaining an SDU 500-2 including data mandatory for an output of second audio next to the first audio after classifying the SDU 520-1 into the third group 580 (or after obtaining the SDU 520-1), the electronic device 101 may classify the SDU 500-2 into the first group 560. For example, based on obtaining an SDU 520-2 including data auxiliary for an output of the second audio after classifying the SDU 500-2 into the first group 560, the electronic device 101 may classify the SDU 520-2 into the third group 580. As a non-limiting example, the data in the SDU 520-2 may be usable for applying an effect to the second audio.

For example, based on obtaining an SDU 500-3 including data mandatory for an output of third audio next to the second audio after classifying the SDU 520-2 into the third group 580, the electronic device 101 may classify the SDU 500-3 into the first group 560. For example, based on obtaining an SDU 510-1 including data auxiliary for an output of each of the first audio to third audio after classifying the SDU 500-3 into the first group 560, the electronic device 101 may classify the SDU 510-1 into the second group 570. As a non-limiting example, the data in the SDU 510-1 may be usable for applying an effect to each of the first audio to third audio. For example, based on obtaining an SDU 520-3 including data auxiliary for an output of the third audio after classifying the SDU 510-1 into the second group 570, the electronic device 101 may classify the SDU 520-3 into the third group 580. The data in the SDU 520-3 may be usable for applying an effect to the third audio.

For example, based on obtaining an SDU 500-4 including data mandatory for an output of fourth audio next to the third audio after classifying the SDU 520-3 into the third group 580, the electronic device 101 may classify the SDU 500-4 into the first group 560. For example, based on obtaining an SDU 520-4 including data auxiliary for an output of the fourth audio after classifying the SDU 500-4 into the first group 560, the electronic device 101 may classify the SDU 520-4 into the third group 580. The data in the SDU 520-4 may be usable for applying an effect to the fourth audio.

For example, based on obtaining an SDU 500-5 including data mandatory for an output of fifth audio next to the fourth audio after classifying the SDU 520-4 into the third group 580, the electronic device 101 may classify the SDU 500-5 into the first group 560. For example, based on obtaining an SDU 520-5 including data auxiliary for an output of the fifth audio after classifying the SDU 500-5 into the first group 560, the electronic device 101 may classify the SDU 520-5 into the third group 580. The data in the SDU 520-5 may be usable for applying an effect to the fifth audio.

For example, based on obtaining an SDU 500-6 including data mandatory for an output of sixth audio next to the fifth audio after classifying the SDU 520-5 into the third group 580, the electronic device 101 may classify the SDU 500-6 into the first group 560. For example, based on obtaining an SDU 510-2 including data auxiliary for an output of each of the fourth audio to sixth audio after classifying the SDU 500-6 into the first group 560, the electronic device 101 may classify the SDU 510-2 into the second group 570. For example, the data in the SDU 510-2 may be usable for applying an effect to each of the fourth audio to sixth audio. For example, based on obtaining an SDU 520-6 including data auxiliary for an output of the sixth audio after classifying the SDU 510-2 into the second group 570, the electronic device 101 may classify the SDU 520-6 into the third group 580. The data in the SDU 520-6 may be usable for applying an effect to the sixth audio.

For example, based on obtaining an SDU 500-7 including data mandatory for an output of seventh audio next to the sixth audio after classifying the SDU 520-6 into the third group 580, the electronic device 101 may classify the SDU 500-7 into the first group 560. For example, based on obtaining an SDU 520-7 including data auxiliary for an output of the seventh audio after classifying the SDU 500-7 into the first group 560, the electronic device 101 may classify the SDU 520-7 into the third group 580. The data in the SDU 520-7 may be usable for applying an effect to the seventh audio.

For example, based on obtaining an SDU 500-8 including data mandatory for an output of eighth audio next to the seventh audio after classifying the SDU 520-7 into the third group 580, the electronic device 101 may classify the SDU 500-8 into the first group 560. For example, based on obtaining an SDU 520-8 including data auxiliary for an output of the eighth audio after classifying the SDU 500-8 into the first group 560, the electronic device 101 may classify the SDU 520-8 into the third group 580. The data in the SDU 520-5 may be usable for applying an effect to the eighth audio.

For example, based on obtaining an SDU 500-9 including data mandatory for an output of ninth audio next to the eighth audio after classifying the SDU 520-8 into the third group 580, the electronic device 101 may classify the SDU 500-9 into the first group 560. For example, based on obtaining an SDU 510-3 including data auxiliary for an output of each of the seventh audio to ninth audio after classifying the SDU 500-9 into the first group 560, the electronic device 101 may classify the SDU 510-3 into the second group 570. For example, the data in the SDU 510-3 may be usable for applying an effect to each of the seventh audio to ninth audio. For example, based on obtaining an SDU 520-9 including data auxiliary for an output of the ninth audio after classifying the SDU 510-3 into the second group 570, the electronic device 101 may classify the SDU 520-9 into the third group 580. The data in the SDU 520-9 may be usable for applying an effect to the ninth audio.

Referring back to FIG. 4, a type of data in each of SDUs included in a first group among the plurality of groups may be different from a type of data in each of SDUs included in a second group having a priority lower than a priority of the first group among the plurality of groups. For example, a type of data in each of SDUs included in a third group having a priority lower than the priority of the second group among the plurality of groups may be different from the type of the data in each of the SDUs in the first group and the type of the data in each of the SDUs in the second group. For example, the type of the data in each of the SDUs in the first group may be core data, which is data mandatory for an output of audio, the type of the data in each of the SDUs in the second group may be first extension data, which is data auxiliary for an output of audio, and the type of the data in each of the SDUs in the third group may be second extension data, which is data auxiliary for an output of audio and has a priority lower than a priority of the first extension data.

For example, a size of each of SDUs included in the first group among the plurality of groups may be larger than a size of each of SDUs included in the second group among the plurality of groups. For example, a size of each of SDUs included in the third group among the plurality of groups may be smaller than a size of each of the SDUs in the second group among the plurality of groups.

For example, an SDU interval for each of SDUs included in the first group among the plurality of groups may be (substantially) identical to an SDU interval for each of SDUs included in the second group among the plurality of groups and an SDU interval for each of SDUs included in the third group among the plurality of groups.

For another example, an SDU interval for each of SDUs included in the first group among the plurality of groups may be different from at least one of an SDU interval for each of SDUs included in the second group among the plurality of groups or an SDU interval for each of SDUs included in the third group among the plurality of groups. For example, an SDU interval for each of SDUs included in the second group among the plurality of groups may be different from an SDU interval for each of SDUs included in the third group among the plurality of groups.

For example, since a size of each of the SDUs in the first group is larger than a size of each of the SDUs in the second group and the SDU interval for each of the SDUs in the first group is identical to the SDU interval for each of the SDUs in the second group, a bit rate regarding each of the SDUs in the first group may be higher than a bit rate regarding each of the SDUs in the second group. For example, since a size of each of the SDUs in the second group is larger than a size of each of the SDUs in the third group and the SDU interval for each of the SDUs in the second group is identical to the SDU interval for each of the SDUs in the third group, a bit rate regarding each of the SDUs in the second group may be higher than a bit rate regarding each of the SDUs in the third group. However, it is not limited thereto.

For example, a transmission opportunity of a packet (e.g., a protocol data unit (PDU)) obtained from each of the SDUs in the first group may be greater than a transmission opportunity of a packet obtained from each of the SDUs in the second group. For example, a transmission opportunity of the packet obtained from each of the SDUs in the second group may be greater than a transmission opportunity of a packet obtained from each of the SDUs in the third group. For example, a time allocated for a transmission of the packet obtained from each of the SDUs in the first group and one or more retransmissions of the packet obtained from each of the SDUs in the first group may be longer than a time allocated for a transmission of the packet obtained from each of the SDUs in the second group and one or more retransmissions of the packet obtained from each of the SDUs in the second group. For example, a time allocated for a transmission of the packet obtained from each of the SDUs in the second group and one or more retransmissions of the packet obtained from each of the SDUs in the second group may be longer than a time allocated for a transmission of the packet obtained from each of the SDUs in the third group and one or more retransmissions of the packet obtained from each of the SDUs in the third group.

For example, a flush timeout value of the packet obtained from each of the SDUs in the first group may be greater than a flush timeout value of the packet obtained from each of the SDUs in the second group. For example, a flush timeout value of the packet obtained from each of the SDUs in the second group may be greater than a flush timeout value of the packet obtained from each of the SDUs in the third group. For example, each of the flush timeout value of the packet obtained from each of the SDUs in the first group, the flush timeout value of the packet obtained from each of the SDUs in the second group, and the flush timeout value of the packet obtained from each of the SDUs in the third group may be determined according to a jitter buffer depth. For example, the flush timeout value of the packet obtained from each of the SDUs in the first group may be a value corresponding to a predetermined ratio of the jitter buffer depth (e.g., about 2/3 of the jitter buffer depth). For example, a flush timeout value of the packet obtained from each of the SDUs in the second group may be a value obtained by subtracting the SDU interval for each of the SDUs included in the first group from the flush timeout value of the packet obtained from each of the SDUs in the first group. For example, the flush timeout value of the packet obtained from each of the SDUs in the third group may be a value obtained by subtracting the SDU interval for each of the SDUs included in the second group from the flush timeout value of the packet obtained from each of the SDUs in the second group. For example, the electronic device 101 may enhance quality of audio outputted according to the audio service in the external electronic device 111, by setting a flush timeout value for each of the plurality of groups according to the jitter buffer depth. As a non-limiting example, the electronic device 101 may reduce occurrence of audio dropout in the external electronic device 111 in relation to the audio service by setting a flush timeout value for each of the plurality of groups according to the jitter buffer depth.

For example, a maximum retransmission number (or counter) of the packet obtained from each of the SDUs in the first group may be greater than a maximum retransmission number of the packet obtained from each of the SDUs in the second group. For example, a maximum retransmission number (or counter) of the packet obtained from each of the SDUs in the second group may be greater than a maximum retransmission number of the packet obtained from each of the SDUs in the third group.

The above examples may be represented as shown in Table 1 below.

**[Table 1]**

| Group | Priority | Type of Data | SDU Size | SDU Interval | Flush Timeout Value | Maximum Retransmission Number |
|---|---|---|---|---|---|---|
| 1 | 1 | Core data | 120 (byte) | 10 (ms) | 100 (ms) | 40 |
| 2 | 2 | First extension data | 80 (byte) | 10 (ms) | 80 (ms) | 20 |
| 3 | 3 | Second extension data | 80 (byte) | 10 (ms) | 60 (ms) | 10 |

When a flush timeout value of Table 1 is used for each of the plurality of groups, a maximum retransmission count of Table 1 may not be used for each of the plurality of groups. When a maximum retransmission number of Table 1 is used for each of the plurality of groups, a flush timeout value of Table 1 may not be used for each of the plurality of groups.

Referring back to FIG. 4, in operation 405, the electronic device 101 may store SDUs classified into the plurality of groups in a buffer for the communication circuitry 230. For example, operation 405 may be executed by executing instructions stored in the memory 220. For example, the instructions may be executed by the processor 210. For example, the instructions may also be executed by the communication circuitry 230 under control of the processor 210.

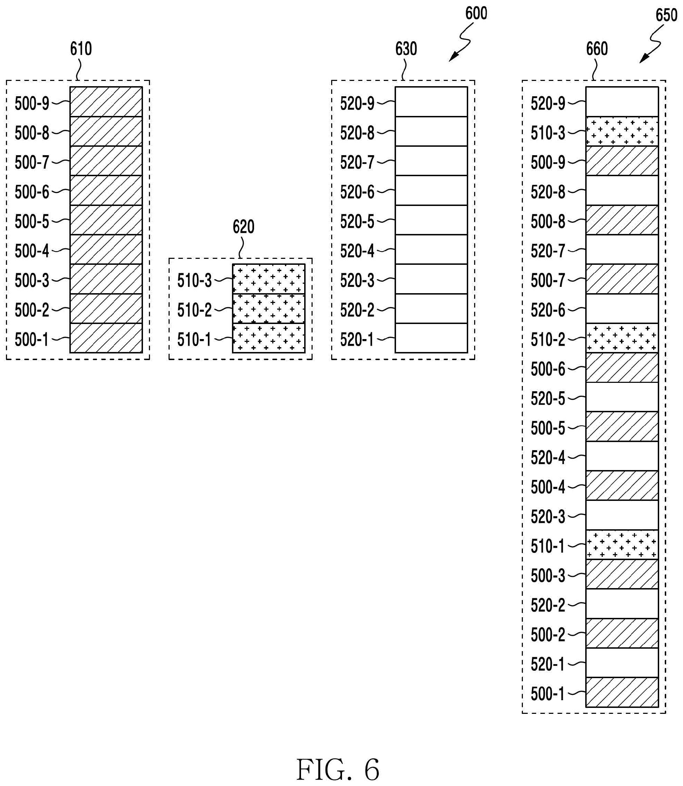

For example, the buffer may be implemented as hardware or may be implemented as software. Storing the SDUs in the buffer is exemplified in the description of FIG. 6.

FIG. 6 illustrates an exemplary method of storing SDUs in a buffer.

Referring to FIG. 6, the electronic device 101 may have a buffer for each of the plurality of groups. For example, as in a state 600, the electronic device 101 may have a buffer 610 for a first group 560 among the plurality of groups, a buffer 620 for a second group 570 among the plurality of groups, and a buffer 630 for a third group 580 among the plurality of groups.

For example, the buffer 610 may be used to (at least temporarily) store SDUs classified into the first group 560. For example, the SDUs classified into the first group 560 may be sequentially stored in the buffer 610. For example, an SDU 500-1 to an SDU 500-9 may be stored in the buffer 610 according to an order in which the SDU 500-1 to the SDU 500-9 are obtained (or an order in which the SDU 500-1 to the SDU 500-9 are classified into the first group 560). For example, an SDU stored first in the buffer 610 may be read first by the electronic device 101 (or the communication circuitry 230) (or the processor 210). For example, the SDU 500-1 stored in the buffer 610 may be preferentially read by the electronic device 101 (or the communication circuitry 230) (or the processor 210) over the SDU 500-2 to the SDU 500-9 stored in the buffer 610.

For example, the buffer 620 may be used to (at least temporarily) store SDUs classified into the second group 570. For example, the SDUs classified into the second group 570 may be sequentially stored in the buffer 620. For example, an SDU 510-1 to an SDU 510-3 may be stored in the buffer 620 according to an order in which the SDU 510-1 to the SDU 510-3 are obtained (or an order in which the SDU 510-1 to the SDU 510-3 are classified into the second group 570). For example, an SDU stored earlier in the buffer 620 may be read first by the electronic device 101 (or the communication circuitry 230) (or the processor 210). For example, the SDU 510-1 stored in the buffer 620 may be preferentially read by the electronic device 101 (or the communication circuitry 230) (or the processor 210) over the SDU 510-2 to the SDU 510-3 stored in the buffer 620.

For example, the buffer 630 may be used to (at least temporarily) store SDUs classified into the third group 580. For example, the SDUs classified into the third group 580 may be sequentially stored in the buffer 630. For example, an SDU 520-1 to an SDU 520-9 may be stored in the buffer 630 according to an order in which the SDU 520-1 to the SDU 520-9 are obtained (or an order in which the SDU 520-1 to the SDU 520-9 are classified into the third group 580). For example, an SDU stored earlier in the buffer 630 may be read first by the electronic device 101 (or the communication circuitry 230) (or the processor 210). For example, the SDU 520-1 stored in the buffer 630 may be preferentially read by the electronic device 101 (or the communication circuitry 230) (or the processor 210) over the SDU 530-2 to the SDU 530-9 stored in the buffer 630.

The electronic device 101 may have one buffer (or a single buffer). For example, as in a state 650, the electronic device 101 may have a buffer 660.

For example, the electronic device 101 may store SDUs in the buffer 660 according to an order in which the SDUs are obtained. For example, the electronic device 101 may store, in the buffer 660, the SDU 500-1 to the SDU 500-9, the SDU 510-1 to the SDU 510-3, and the SDU 520-1 to the SDU 520-9, according to an order indicated by the chart 500 of FIG. 5. For example, an SDU stored first in the buffer 660 may be read first by the electronic device 101 (or the communication circuitry 230) (or the processor 210). For example, the SDU 500-1 stored in the buffer 660 may be preferentially read by the electronic device 101 (or the communication circuitry 230) (or the processor 210) over remaining SDUs stored in the buffer 660.

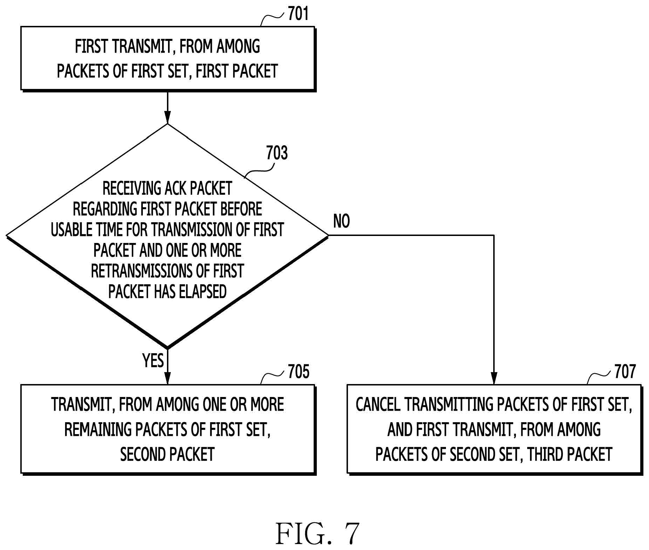

Referring back to FIG. 4, in operation 407, the electronic device 101 may execute transmissions of packets by using the SDUs stored in the buffer, according to the information for the audio service determined in operation 305. For example, operation 407 may be executed by executing instructions stored in the memory 220. For example, the instructions may be executed by the processor 210. For example, the instructions may be executed by the communication circuitry 230 under control of the processor 210. For example, the instructions may be executed by using the communication circuitry 230. Operation 407 is exemplified in more detail in the description of FIG. 7.

FIG. 7 is a flowchart illustrating an exemplary method executed in an electronic device for adaptively changing another packet for transmission to an external electronic device according to a reception state of a packet transmitted to the external electronic device.

Referring to FIG. 7, in operation 701, the electronic device 101 may first transmit, by using the communication circuitry 230, from among packets of a first set to be sequentially transmitted to the external electronic device 111 through the communication link 131 for an output of first audio, a first packet including data mandatory for the output of the first audio. For example, operation 701 may be executed by executing instructions stored in the memory 220. For example, the instructions may be executed by the processor 210. For example, the instructions may be executed by the communication circuitry 230 under control of the processor 210. For example, the instructions may be executed by using the communication circuitry 230.

For example, the packets of the first set may include the first packet (e.g., a packet obtained from the SDU 500-1), which is a packet among packets of a first group having a first priority among the plurality of groups and a second packet (e.g., a packet obtained from the SDU 520-1), which is a packet among packets of a second group having a second priority lower than the first priority among the plurality of groups. For example, the first set may indicate a set of packets included in a transport block defined for decoding executed in the external electronic device 111 for the output of the first audio. However, it is not limited thereto.

For example, each of the packets of the first set and the packets of the second set exemplified in operation 707 may be obtained to output each of the first audio and the second audio, by using the external electronic device 111 through A2DP.

For example, since the first packet has a highest priority among the packets of the first set, the electronic device 101 may transmit the first packet before transmitting one or more remaining packets of the first set (e.g., including the second packet). For example, the one or more remaining packets of the first set may be usable for enhancing quality of the first audio outputted through the external electronic device 111.

For example, transmitting the one or more remaining packets of the first set (e.g., including the second packet) may not be executed in the electronic device 101 until an acknowledgement (ACK) packet regarding the first packet is received, according to the information determined in operation 305. For example, the electronic device 101 may refrain from transmitting the one or more remaining packets of the first set until the ACK packet is received. For example, in a case that the first packet is not received by the external electronic device 111, since the external electronic device 111 is not able to output the first audio even when receiving the one or more remaining packets of the first set, the electronic device 101 may refrain from, defer, skip, bypass, or omit transmitting the one or more remaining packets of the first set until the ACK packet is received.

In operation 703, the electronic device 101 may check, identify, determine, recognize, or monitor whether receiving the ACK packet regarding the first packet before a usable time for the transmission of the first packet (e.g., transmitting the first packet in operation 701) and one or more retransmissions of the first packet (e.g., executed on a condition that the ACK packet regarding the first packet transmitted in operation 701 is not received from the external electronic device 111) has elapsed. For example, operation 703 may be executed by executing instructions stored in the memory 220. For example, the instructions may be executed by the processor 210. For example, the instructions may be executed by the communication circuitry 230 under control of the processor 210. For example, the instructions may be executed by using the communication circuitry 230.

For example, operation 703 may be executed based on the information for the audio service determined in operation 305. For example, the time may correspond to a flush timeout value defined for the first group to which the first packet belongs (or the first group including the first group), according to operation 305. For example, the time may correspond to a maximum retransmission number (or counter) defined for the first group to which the first packet belongs, according to operation 305.

Operation 703 may be implemented in various ways. For example, the electronic device 101 may check whether receiving the ACK packet before the flush timeout of the first packet (e.g., a flush timeout according to the flush timeout value defined for the first group), thereby checking whether receiving the ACK packet before the time has elapsed. As another example, the electronic device 101 may check whether receiving the ACK packet before the number of one or more retransmissions of the first packet, which are executed based on not receiving the ACK packet regarding the first packet transmitted in operation 701 from the external electronic device 111, reaches a reference number (e.g., the maximum retransmission number defined for the first group).

For example, the electronic device 101 may execute operation 705 on a condition of receiving the ACK packet before the time has elapsed, and may execute operation 707 otherwise.

In operation 705, the electronic device 101 may transmit, by using the communication circuitry 230, from among the one or more remaining packets of the first set, a second packet including data optional for the output of the first audio, based on receiving the ACK packet from the external electronic device 111 before the time has elapsed. For example, operation 705 may be executed by executing instructions stored in the memory 220. For example, the instructions may be executed by the processor 210. For example, the instructions may be executed by the communication circuitry 230 under control of the processor 210. For example, the instructions may be executed by using the communication circuitry 230.

For example, the electronic device 101 may transmit the second packet based on receiving the ACK packet from the external electronic device 111 before the flush timeout of the first packet.

For another example, the electronic device 101 may execute the one or more retransmissions of the first packet based on not receiving an ACK packet regarding the first packet transmitted in operation 701. For example, the electronic device 101 may transmit the second packet based on receiving the ACK packet before the number of the one or more retransmissions of the first packet reaches the reference number.

For example, since a priority of the second packet is lower than a priority of the first packet, a usable time for the transmission of the second packet and one or more retransmissions of the second packet may be shorter than a usable time for the transmission of the first packet and the one or more retransmissions of the first packet.

In operation 707, based on not receiving the ACK packet from the external electronic device 111 until the time has elapsed, the electronic device 101 may cancel transmitting the packets of the first set, and may first transmit, by using the communication circuitry 230, from among packets of a second set to be sequentially transmitted to the external electronic device 111 through the communication link 131 for an output of second audio next to the first audio, a third packet including data mandatory for the output of the second audio. For example, operation 707 may be executed by executing instructions stored in the memory 220. For example, the instructions may be executed by the processor 210. For example, the instructions may be executed by the communication circuitry 230 under control of the processor 210. For example, the instructions may be executed by using the communication circuitry 230.

Operation 707 may be implemented in various ways. For example, based on not receiving the ACK packet until the flush timeout of the first packet, the electronic device 101 may cancel transmitting the packets of the first set, and may first transmit, from among the packets of the second set, the third packet. As another example, based on not receiving the ACK packet until the number of the one or more retransmissions of the first packet reaches the reference number, the electronic device 101 may cancel transmitting the packets of the first set, and may first transmit, from among the packets of the second set, the third packet.

For example, canceling to transmit the packets of the first set may include removing a schedule for transmitting the packets of the first set. For example, canceling to transmit the packets of the first set may include discarding the packets of the first set from a buffer for the communication circuitry 230. For example, canceling to transmit the packets of the first set may include abandoning to transmit the packets of the first set. For example, canceling to transmit the packets of the first set may include refraining from transmitting the packets of the first set. For example, canceling to transmit the packets of the first set may include terminating transmitting the packets of the first set. For example, canceling to transmit the packets of the first set may include ceasing to transmit the packets of the first set. For example, canceling to transmit the packets of the first set may indicate that all of the packets of the first set are not received by the external electronic device 111.

Canceling to transmit the packets of the first set may be implemented in various ways. For example, the electronic device 101 may cancel transmitting the packets of the first set by discarding the second packet before the flush timeout of the first packet and discarding the first packet in response to the flush timeout of the first packet.

For example, the packets of the second set may include the third packet (e.g., a packet obtained from the SDU 500-2), which is a packet among packets of the first group having the first priority among the plurality of groups and a fourth packet (e.g., a packet obtained from the SDU 520-2), which is a packet among packets of the second group having the second priority among the plurality of groups. For example, the second set may indicate a set of packets included in a transport block defined for decoding executed in the external electronic device 111 for the output of the second audio. However, it is not limited thereto.

For example, since the third packet has a highest priority among the packets of the second set, the electronic device 101 may transmit the third packet before transmitting one or more remaining packets of the second set (e.g., including the fourth packet). For example, transmitting one or more remaining packets of the second set (e.g., including the fourth packet) may not be executed in the electronic device 101 until an ACK packet regarding the third packet is received, according to the information determined in operation 305. For example, the electronic device 101 may refrain from transmitting the one or more remaining packets of the second set until the ACK packet is received. For example, in a case that the third packet is not received by the external electronic device 111, since the external electronic device 111 is not able to output the second audio even when receiving the one or more remaining packets of the second set, the electronic device 101 may refrain from, defer, skip, bypass, or omit transmitting the one or more remaining packets of the second set until the ACK packet is received.

Although not illustrated in FIG. 7, for example, the electronic device 101 may transmit, by using the communication circuitry 230, to the external electronic device 111 through the communication link 131, a packet replacing the first packet, based on not receiving an ACK packet regarding the first packet from the external electronic device 111 until the usable time for the transmission of the first packet and the one or more retransmissions of the first packet (or a maximum time allocated for the transmission of the first packet and the one or more retransmissions of the first packet) has elapsed, before transmitting the third packet. For example, transmitting the packet replacing the first packet may be executed before transmitting the third packet in operation 707 based on determining, in operation 703, that the ACK packet regarding the first packet is not received. For example, the packet may have a sequence number identical to a sequence number of the first packet. For example, a length of the packet may be 0. For example, a logical link identifier (LLID) code of a payload header of the packet may be '0b01'. For example, the electronic device 101 may first transmit, from among the packets of the second set, the third packet having a sequence number (e.g., '1') different from the sequence number (e.g., '0') of the first packet, based on receiving an ACK packet regarding the packet from the external electronic device 111 through the communication link 131.

For example, since a first SDU (e.g., the SDU 500-1) used for generating the first packet and a second SDU (e.g., the SDU 500-2) used for generating the third packet belong to the first group, a bit rate for the first SDU may be identical to a bit rate for the second SDU.

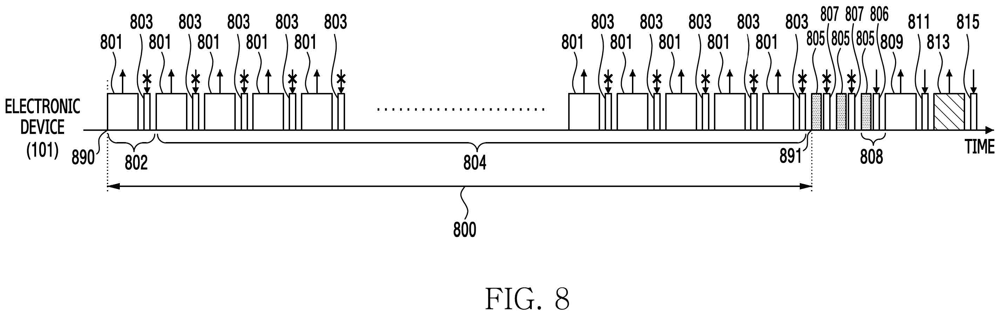

Operations of the electronic device 101 indicated in the description of FIG. 7 may also be expressed as in the descriptions of FIGS. 8 to 11.

FIGS. 8 to 11 illustrate an exemplary method of adaptively changing another packet for transmission to an external electronic device according to a reception state of a packet transmitted to the external electronic device.

Referring to FIG. 8, the electronic device 101 may first transmit, to the external electronic device 111, a packet 801 corresponding to the first packet from among the packets of the first set exemplified in operation 701. For example, the external electronic device 111 may transmit, to the electronic device 101, a non-acknowledgement packet 803 indicating that the packet 801 is not successfully received, or may not transmit, to the electronic device 101, the non-acknowledgement packet 803 regarding the packet 801 due to non-reception of the packet 801.

For example, the electronic device 101 may execute one or more retransmissions of the packet 801 within a time interval 804, based on receiving, from the external electronic device 111, a non-acknowledgement packet 803 within a time interval 802 or not receiving, from the external electronic device 111, an ACK packet regarding the packet 801 and the non-acknowledgement packet 803 within the time interval 802. For example, the electronic device 101 may maintain the one or more retransmissions of the packet 801 until receiving the ACK packet regarding the packet 801.

For example, the electronic device 101 may check whether receiving the ACK packet regarding the packet 801 within a time interval 800 initiated from a timing 890 at which the packet 801 is initially transmitted. For example, a length of the time interval 800 may correspond to a flush timeout value of the packet 801 (or the first group to which the packet 801 belongs) (or the first set to which the packet 801 belongs). For example, a timing 891, which is a termination timing of the time interval 800, may correspond to a timing of a flush timeout of the packet 801.

Although not illustrated in FIG. 8, the electronic device 101 may abandon transmitting the packets of the first set in response to a flush timeout of the packet 801. For example, the electronic device 101 may abandon transmitting the packets of the first set for a transmission opportunity of the packet 809. For example, the electronic device 101 may discard the packet 801 based on checking that the ACK packet regarding the packet 801 is not received within the time interval 800. For example, the packet 801 may be flushed on a condition that the ACK packet regarding the packet 801 is not received within the time interval 800. For example, the packets of the first set may be flushed on a condition that the ACK packet regarding the packet 801 is not received within the time interval 800.

For example, the electronic device 101 may transmit, to the external electronic device 111, in response to the flush timeout of the packet 801, a packet 805 that replaces the packet 801, has a sequence number of the packet 801, and has a length of 0. For example, the packet 805 may be transmitted to inform the external electronic device 111 that the packet 801 is flushed. For example, an LLID code in a payload header of the packet 805 may be '0b01'. For example, the external electronic device 111 may transmit, to the electronic device 101, a non-acknowledgement packet 807 indicating that the packet 805 is not successfully received, or may not transmit, to the electronic device 101, the non-acknowledgement packet 807 regarding the packet 805 due to non-reception of the packet 805.

For example, the electronic device 101 may execute one or more retransmissions of the packet 805 based on receiving a non-acknowledgement packet 807 regarding the packet 805 initially transmitted or not receiving an ACK packet 806 regarding the packet 805 initially transmitted and the non-acknowledgement packet 807. For example, the electronic device 101 may maintain the one or more retransmissions of the packet 805 until receiving the ACK packet 806 regarding the packet 805.

For example, the external electronic device 111 may transmit, to the electronic device 101, within a time interval 808, an ACK packet 806 regarding the packet 805 in response to retransmission of the packet 805. The electronic device 101 may first transmit, to the external electronic device 111, from among the packets of the second set exemplified in operation 707, a packet 809 corresponding to the third packet in response to the ACK packet 806 received from the external electronic device 111. The packet 809 may have another sequence number distinguished from a sequence number of each of the packet 801 and the packet 805.

For example, according to transmission of the packet 809, a flush timeout value of the packet 809 (or a flush timeout value of the first group to which the packet 809 belongs) may be activated. For example, in response to a start of the transmission of the packet 809, a time interval corresponding to the flush timeout value of the packet 809, such as the time interval 800, may be determined (or set).

For example, the external electronic device 111 may transmit, to the electronic device 101, an ACK packet 811 indicating that the packet 809 is successfully received. For example, in response to the ACK packet 811, the electronic device 101 may transmit, to the external electronic device 111, from among one or more remaining packets of the second set, a packet 813 corresponding to the fourth packet including data optional for the output of the second audio. For example, the external electronic device 111 may transmit, to the electronic device 101, an ACK packet 815 indicating successful reception of the packet 813.

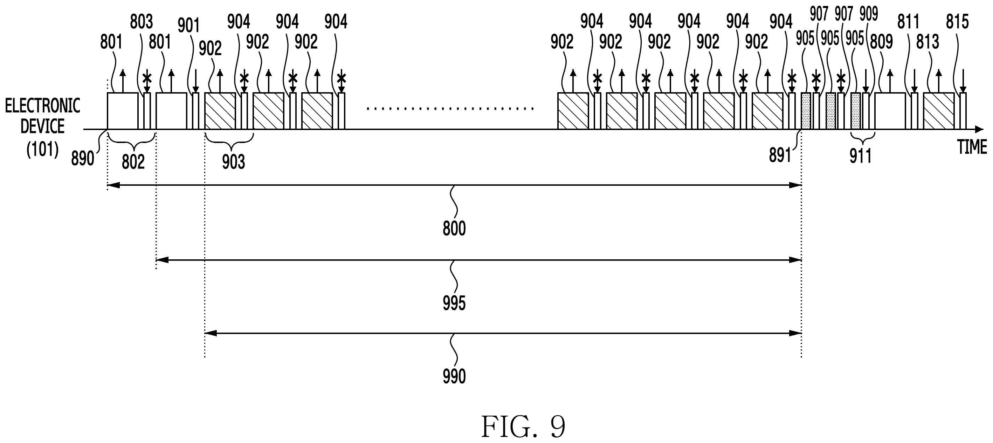

Referring to FIG. 9, the electronic device 101 may first transmit, to the external electronic device 111, from among the packets of the first set exemplified in operation 701, a packet 801 corresponding to the first packet. For example, the external electronic device 111 may transmit, to the electronic device 101, a non-acknowledgement packet 803 indicating that the packet 801 is not successfully received, or may not transmit, to the electronic device 101, the non-acknowledgement packet 803 regarding the packet 801 due to non-reception of the packet 801.

For example, the electronic device 101 may retransmit the packet 801 to the external electronic device 111, based on receiving the non-acknowledgement packet 803 from the external electronic device 111 or based on not receiving, from the external electronic device 111, an ACK packet 901 regarding the packet 801 and the non-acknowledgement packet 803 within a time interval 802. For example, the external electronic device 111 may transmit, to the electronic device 101, the ACK packet 901 regarding the packet 801 in response to successfully receiving the packet 801.

For example, the electronic device 101 may check whether receiving the ACK packet regarding the packet 801 within a time interval 800 initiated from a timing 890 at which the packet 801 is initially transmitted. For example, a length of the time interval 800 may correspond to a flush timeout value of the packet 801 (or the first group to which the packet 801 belongs) (or the packets of the first set). For example, a timing 891, which is a termination timing of the time interval 800, may correspond to a timing of a flush timeout of the packet 801 (or a flush timeout of the packets of the first set).

For example, in response to the ACK packet 901 received within the time interval 800, the electronic device 101 may transmit, to the external electronic device 111, from among one or more remaining packets of the first set, a packet 902 corresponding to the second packet. For example, the external electronic device 111 may transmit, to the electronic device 101, a non-acknowledgement packet 904 indicating that the packet 902 is not successfully received, or may not transmit, to the electronic device 101, the non-acknowledgement packet 904 regarding the packet 902 due to non-reception of the packet 902.

For example, the electronic device 101 may execute one or more retransmissions of the packet 902, based on receiving, from the external electronic device 111, a non-acknowledgement packet 904 within a time interval 903 or not receiving, from the external electronic device 111, an ACK packet regarding the packet 902 and the non-acknowledgement packet 904 within the time interval 903.

Although not illustrated in FIG. 9, the electronic device 101 may abandon transmitting the one or more remaining packets of the first set, based on not receiving the ACK packet regarding the packet 902 until a timing 891, which is a termination timing of the time interval 800 (or in response to a flush timeout of the packet 902). As a non-limiting example, a flush timeout value of the packet 902 may correspond to a time interval 990 or a time interval 995. For example, a start timing of the time interval 990 may correspond to a start timing of transmission of the packet 902 (e.g., a start timing of the time interval 903), and a termination timing of the time interval 990 may correspond to a timing 891, which is the termination timing of the time interval 800. For example, a timing of the flush timeout of the packet 902 may correspond to a timing of the flush timeout of the packet 801, and the flush timeout value of the packet 902 may be shorter than the flush timeout value of the packet 801. As another example, a start timing of the time interval 995 may correspond to a start timing of retransmission of the packet 801, which is an earliest timing at which the packet 902 may be transmitted, and a termination timing of the time interval 995 may correspond to the timing 891, which is the termination timing of the time interval 800. For example, a timing of the flush timeout of the packet 902 may correspond to a timing of the flush timeout of the packet 801, and the flush timeout value of the packet 902 may be shorter than the flush timeout value of the packet 801. For example, the electronic device 101 may transmit, to the external electronic device 111, a packet 905 that replaces the packet 902, has a sequence number of the packet 902, and has a length of 0, based on not receiving the ACK packet regarding the packet 902 until the timing 891, which is the termination timing of the time interval 990. For example, the packet 905 may be transmitted to inform the external electronic device 111 that the packet 902 is flushed. For example, an LLID code in a payload header of the packet 905 may be '0b01'. For example, the external electronic device 111 may transmit, to the electronic device 101, a non-acknowledgement packet 907 indicating that the packet 905 is not successfully received, or may not transmit, to the electronic device 101, the non-acknowledgement packet 907 regarding the packet 905 due to non-reception of the packet 905.

For example, the electronic device 101 may execute the one or more retransmissions of the packet 905 based on receiving a non-acknowledgement packet 907 regarding the packet 905 initially transmitted or not receiving an ACK packet 909 regarding the packet 905 initially transmitted and the non-acknowledgement packet 907. For example, the electronic device 101 may maintain the one or more retransmissions of the packet 905 until receiving the ACK packet 909 regarding the packet 905.

For example, the external electronic device 111 may transmit, to the electronic device 101, within a time interval 911, an ACK packet 909 regarding the packet 905 in response to retransmission of the packet 905. The electronic device 101 may first transmit, to the external electronic device 111, from among the packets of the second set exemplified in operation 707, a packet 809 corresponding to the third packet in response to the ACK packet 909 received from the external electronic device 111. The packet 809 may have another sequence number distinguished from a sequence number of each of the packet 902 and the packet 905.

For example, the external electronic device 111 may transmit, to the electronic device 101, an ACK packet 811 indicating that the packet 809 is successfully received. For example, in response to the ACK packet 811, the electronic device 101 may transmit, to the external electronic device 111, from among one or more remaining packets of the second set, a packet 813 corresponding to the fourth packet including data optional for the output of the second audio. For example, the external electronic device 111 may transmit, to the electronic device 101, an ACK packet 815 indicating successful reception of the packet 813.

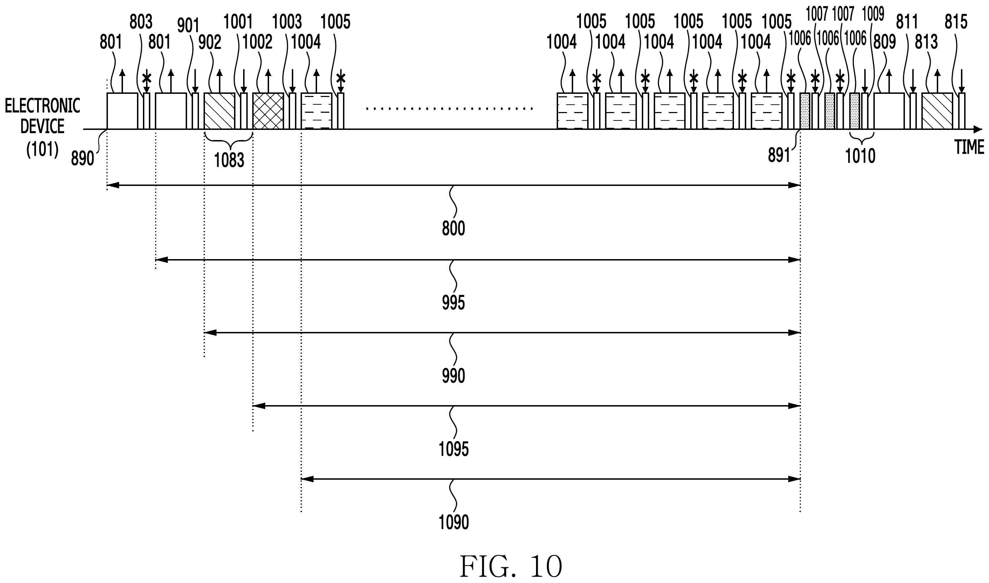

Referring to FIG. 10, the electronic device 101 may first transmit, to the external electronic device 111, from among the packets of the first set exemplified in operation 701, a packet 801 corresponding to the first packet. For example, the external electronic device 111 may transmit, to the electronic device 101, a non-acknowledgement packet 803 indicating that the packet 801 is not successfully received, or may not transmit, to the electronic device 101, the non-acknowledgement packet 803 regarding the packet 801 due to non-reception of the packet 801.

For example, the electronic device 101 may retransmit the packet 801 to the external electronic device 111, based on receiving, from the external electronic device 111, the non-acknowledgement packet 803 or not receiving, from the external electronic device 111, the ACK packet 901 regarding the packet 801 and the non-acknowledgement packet 803 regarding the packet 801. For example, the external electronic device 111 may transmit, to the electronic device 101, the ACK packet 901 regarding the packet 801 in response to successfully receiving the packet 801.

For example, the electronic device 101 may check whether receiving the ACK packet regarding the packet 801 within a time interval 800 initiated from a timing 890 at which the packet 801 is initially transmitted. For example, a length of the time interval 800 may correspond to a flush timeout value of the packet 801 (or the first group to which the packet 801 belongs) (or the packets of the first set). For example, a timing 891, which is a termination timing of the time interval 800, may correspond to a timing of a flush timeout of the packet 801 (or a flush timeout of the packets of the first set).

For example, the electronic device 101 may transmit, to the external electronic device 111, from among one or more remaining packets of the first set, a packet 902 corresponding to the second packet, in response to the ACK packet 901 received within the time interval 800. For example, the external electronic device 111 may transmit, to the electronic device 101, an ACK packet 1001 indicating that the packet 902 is successfully received.

As a non-limiting example, a flush timeout value of the packet 902 may correspond to a time interval 990 or a time interval 995. For example, a start timing of the time interval 990 may correspond to a start timing of transmission of the packet 902 (e.g., a start timing of a time interval 1083), and a termination timing of the time interval 990 may correspond to a timing 891, which is a termination timing of the time interval 800. For example, a timing of the flush timeout of the packet 902 may correspond to a timing of the flush timeout of the packet 801, and the flush timeout value of the packet 902 may be shorter than the flush timeout value of the packet 801. As another example, a start timing of the time interval 995 may correspond to a start timing of retransmission of the packet 801, which is an earliest timing at which the packet 902 may be transmitted, and a termination timing of the time interval 995 may correspond to the timing 891, which is the termination timing of the time interval 800. For example, a timing of the flush timeout of the packet 902 may correspond to a timing of the flush timeout of the packet 801, and the flush timeout value of the packet 902 may be shorter than the flush timeout value of the packet 801.

For example, the electronic device 101 may transmit, to the external electronic device 111, from among one or more remaining packets of the first set, a packet 1002 having a priority lower than a priority of each of the packet 801 and the packet 902 and including data optional for the output of the first audio, in response to the ACK packet 1001 received within the time interval 800. For example, the external electronic device 111 may transmit, to the electronic device 101, an ACK packet 1003 indicating that the packet 1002 is successfully received.

For example, the electronic device 101 may transmit, to the external electronic device 111, from among one or more remaining packets of the first set, a packet 1004 having a priority lower than a priority of each of the packet 801, the packet 902, and the packet 1002 and including data optional for the output of the first audio, in response to the ACK packet 1003 received within the time interval 800. For example, the external electronic device 111 may transmit, to the electronic device 101, a non-acknowledgement packet 1005 indicating that the packet 1004 is not successfully received, or may not transmit, to the electronic device 101, the non-acknowledgement packet 1005 regarding the packet 1004 due to non-reception of the packet 1004.

For example, the electronic device 101 may execute one or more retransmissions of the packet 1004, based on not receiving the ACK packet regarding the packet 1004 initially transmitted.

Although not illustrated in FIG. 10, the electronic device 101 may abandon transmitting one or more remaining packets of the first set, based on not receiving the ACK packet regarding the packet 1004 until a timing 891, which is a termination timing of the time interval 800 (or in response to a flush timeout of the packet 1004). For example, a timing of the flush timeout of the packet 1004 may correspond to a timing of the flush timeout of the packet 801, and a flush timeout value of the packet 1004 may be shorter than a flush timeout value of the packet 801 (e.g., corresponding to a length of the time interval 800), a flush timeout value of the packet 902 (e.g., corresponding to a length of the time interval 990 or the time interval 995), and a flush timeout value of the packet 1002 (e.g., corresponding to a length of the time interval 1095 or the time interval 990). For example, the flush timeout value of the packet 1004 may correspond to a length of the time interval 1090 or a length of the time interval 1095.

For example, the electronic device 101 may transmit, to the external electronic device 111, a packet 1006 that replaces the packet 1004, has a sequence number of the packet 1004, and has a length of 0, based on not receiving the ACK packet regarding the packet 1004 until a timing 891, which is a termination timing of the time interval 800. For example, the packet 1006 may be transmitted to inform the external electronic device 111 that the packet 1004 is flushed. For example, an LLID code in a payload header of the packet 1006 may be '0b01'. For example, the external electronic device 111 may transmit, to the electronic device 101, a non-acknowledgement packet 1007 indicating that the packet 1006 is not successfully received, or may not transmit, to the electronic device 101, the non-acknowledgement packet 1007 regarding the packet 1006 due to non-reception of the packet 1006.

For example, the electronic device 101 may execute one or more retransmissions of the packet 1006, based on receiving a non-acknowledgement packet 1007 regarding the packet 1006 initially transmitted or not receiving an ACK packet 1009 regarding the packet 1006 initially transmitted and the non-acknowledgement packet 1007. For example, the electronic device 101 may maintain the one or more retransmissions of the packet 1006 until receiving the ACK packet 1009 regarding the packet 1006.

For example, the external electronic device 111 may transmit, to the electronic device 101, within a time interval 1010, the ACK packet 1009 regarding the packet 1006 in response to retransmission of the packet 1006. The electronic device 101 may first transmit, to the external electronic device 111, from among the packets of the second set exemplified in operation 707, a packet 809 corresponding to the third packet in response to the ACK packet 1009 received from the external electronic device 111. The packet 809 may have another sequence number distinguished from a sequence number of each of the packet 1004 and the packet 1006.

For example, the external electronic device 111 may transmit, to the electronic device 101, an ACK packet 811 indicating that the packet 809 is successfully received. For example, the electronic device 101 may transmit, to the external electronic device 111, from among one or more remaining packets of the second set, a packet 813 corresponding to the fourth packet including data optional for the output of the second audio in response to the ACK packet 811. For example, the external electronic device 111 may transmit, to the electronic device 101, an ACK packet 815 indicating successful reception of the packet 813.

For example, transmission exemplified in the description of FIG. 7 may be executed through a maximum retransmission number.

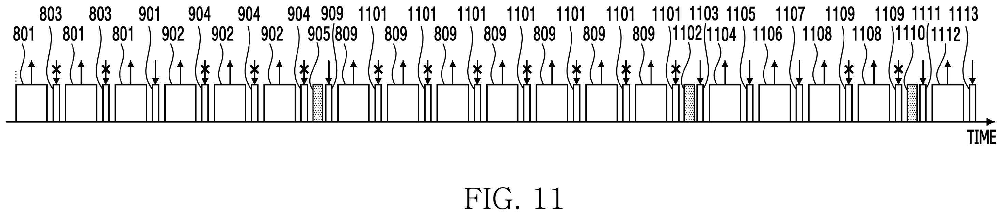

Referring to FIG. 11, the electronic device 101 may first transmit, to the external electronic device 111, from among the packets of the first set exemplified in operation 701, a packet 801 corresponding to the first packet. For example, the external electronic device 111 may transmit, to the electronic device 101, a non-acknowledgement packet 803 indicating that the packet 801 is not successfully received, or may not transmit, to the electronic device 101, the non-acknowledgement packet 803 regarding the packet 801 due to non-reception of the packet 801.

For example, the electronic device 101 may execute one or more retransmissions of the packet 801 based on receiving the non-acknowledgement packet 803 from the external electronic device 111 or not receiving, from the external electronic device 111, an ACK packet 901 regarding the packet 801 and the non-acknowledgement packet 803. As a non-limiting example, a maximum retransmission number defined for the first group related to the packet 801 may be 6. For example, the electronic device 101 may maintain the one or more retransmissions of the packet 801 until the number of the one or more retransmissions of the packet 801 reaches 6, which is the maximum retransmission number.

For example, the electronic device 101 may transmit, to the external electronic device 111, from among one or more remaining packets of the first set, a packet 902 corresponding to the second packet, based on receiving an ACK packet 901 regarding the packet 801 from the external electronic device 111 before the number of the one or more retransmissions of the packet 801 reaches 6. For example, the external electronic device 111 may transmit, to the electronic device 101, a non-acknowledgement packet 904 indicating that the packet 902 is not successfully received, or may not transmit, to the electronic device 101, the non-acknowledgement packet 904 regarding the packet 902 due to non-reception of the packet 902.

For example, the electronic device 101 may execute one or more retransmissions of the packet 902 based on receiving the non-acknowledgement packet 904 from the external electronic device 111 or not receiving, from the external electronic device 111, an ACK packet regarding the packet 902 and the non-acknowledgement packet 904. As a non-limiting example, a maximum retransmission number defined for the second group related to the packet 902 may be 2. For example, the electronic device 101 may maintain the one or more retransmissions of the packet 902 until the number of the one or more retransmissions of the packet 801 reaches 2, which is the maximum retransmission number.

For example, the electronic device 101 may transmit, to the external electronic device 111, a packet 905 that replaces the packet 902, has a sequence number of the packet 902, and has a length of 0, based on not receiving the ACK packet regarding the packet 902 from the external electronic device 111 until the number of the one or more retransmissions of the packet 902 reaches 2. For example, the packet 905 may be transmitted to inform the external electronic device 111 that the packet 902 is flushed. For example, an LLID code in a payload header of the packet 905 may be '0b01'. For example, the external electronic device 111 may transmit, to the electronic device 101, an ACK packet 909 indicating that the packet 905 is successfully received.

Although not illustrated in FIG. 11, the electronic device 101 may abandon transmitting one or more remaining packets of the first set, based on not receiving the ACK packet regarding the packet 902 from the external electronic device 111 until the number of the one or more retransmissions reaches 2.

For example, the electronic device 101 may first transmit, to the external electronic device 111, from among the packets of the second set exemplified in operation 707, a packet 809 corresponding to the third packet in response to the ACK packet 909 received from the external electronic device 111. The packet 809 may have another sequence number distinguished from a sequence number of each of the packet 902 and the packet 905. For example, the external electronic device 111 may transmit, to the electronic device 101, a non-acknowledgement packet 1101 indicating that the packet 809 is not successfully received, or may not transmit, to the electronic device 101, the non-acknowledgement packet 1101 regarding the packet 809 due to non-reception of the packet 809.

For example, the electronic device 101 may execute one or more retransmissions of the packet 809 based on receiving the non-acknowledgement packet 1101 from the external electronic device 111 or not receiving, from the external electronic device 111, an ACK packet regarding the packet 809 and the non-acknowledgement packet 1101. As a non-limiting example, since a maximum retransmission number defined for the first group related to the packet 809 is 6, the electronic device 101 may maintain the one or more retransmissions of the packet 809 until the number of the one or more retransmissions of the packet 809 reaches 6, which is the maximum retransmission number.

For example, the electronic device 101 may transmit, to the external electronic device 111, a packet 1102 that replaces the packet 809, has a sequence number of the packet 809, and has a length of 0, based on not receiving the ACK packet regarding the packet 809 from the external electronic device 111 until the number of the one or more retransmissions of the packet 809 reaches 6. For example, the packet 1102 may be transmitted to inform the external electronic device 111 that the packet 809 is flushed. For example, an LLID code in a payload header of the packet 1102 may be '0b01'. For example, the external electronic device 111 may transmit, to the electronic device 101, an ACK packet 1103 indicating that the packet 1102 is successfully received.

Although not illustrated in FIG. 11, the electronic device 101 may abandon transmitting the packets of the second set, based on not receiving the ACK packet regarding the packet 809 from the external electronic device 111 until the number of the one or more retransmissions of the packet 809 reaches 6.

For example, the electronic device 101 may first transmit, to the external electronic device 111, from among packets of a third set to be transmitted to the external electronic device 111 through the communication link 131 for an output of third audio next to the second audio, a packet 1104 having a highest priority (e.g., a maximum retransmission number defined for the first group related to the packet 1104 is 6), in response to the ACK packet 1103 received from the external electronic device 111. The packet 1104 may include data mandatory for the output of the third audio. The packet 1104 may have another sequence number distinguished from a sequence number of each of the packet 809 and the packet 1102. For example, the external electronic device 111 may transmit, to the electronic device 101, an ACK packet 1105 indicating that the packet 1104 is successfully received.

For example, the electronic device 101 may first transmit, from among one or more remaining packets of the third set, a packet 1106 including data optional for the output of the third audio, based on receiving the ACK packet 1105 from the external electronic device 111 before retransmission of the packet 1104 is executed. For example, the packet 1106 may have another sequence number distinguished from a sequence number of the packet 1104. For example, the external electronic device 111 may transmit, to the electronic device 101, an ACK packet 1107 indicating that the packet 1106 is successfully received.

For example, the electronic device 101 may first transmit, from among one or more remaining packets of the third set, a packet 1108 including data optional for the output of the third audio, based on receiving the ACK packet 1107 from the external electronic device 111 before retransmission of the packet 1106 is executed. For example, a priority of the packet 1108 may be lower than a priority of the packet 1106. For example, the external electronic device 111 may transmit, to the electronic device 101, a non-acknowledgement packet 1109 indicating that the packet 1108 is not successfully received, or may not transmit, to the electronic device 101, the non-acknowledgement packet 1109 regarding the packet 1108 due to non-reception of the packet 1108.

For example, the electronic device 101 may execute one or more retransmissions of the packet 1108, based on receiving the non-acknowledgement packet 1109 from the external electronic device 111 or not receiving, from the external electronic device 111, an ACK packet 1110 regarding the packet 1108 and the non-acknowledgement packet 1109. As a non-limiting example, a maximum retransmission number defined for a third group related to the packet 1108 may be 1. For example, the electronic device 101 may maintain the one or more retransmissions of the packet 1108 until the number of the one or more retransmissions of the packet 1108 reaches 1, which is the maximum retransmission number.

For example, it may transmit, to the external electronic device 111, a packet 1110 that replaces the packet 1108, has a sequence number of the packet 1108, and has a length of 0, based on not receiving the ACK packet regarding the packet 1108 from the external electronic device 111 until the number of the one or more retransmissions of the packet 1108 reaches 1. For example, the packet 1110 may be transmitted to inform the external electronic device 111 that the packet 1108 is flushed. For example, an LLID code in a payload header of the packet 1110 may be '0b01'. For example, the external electronic device 111 may transmit, to the electronic device 101, an ACK packet 1111 indicating that the packet 1110 is successfully received.

Although not illustrated in FIG. 11, the electronic device 101 may abandon transmitting the packets of the third set, based on not receiving the ACK packet regarding the packet 1108 from the external electronic device 111 until the number of the one or more retransmissions of the packet 1108 reaches 1.

For example, the electronic device 101 may first transmit, to the external electronic device 111, from among packets of a fourth set to be transmitted to the external electronic device 111 through the communication link 131 for an output of fourth audio next to the third audio, a packet 1112 having a highest priority (e.g., a maximum retransmission number defined for the first group related to the packet 1112 is 6), in response to the ACK packet 1111 received from the external electronic device 111. The packet 1112 may include data mandatory for the output of the fourth audio. The packet 1112 may have another sequence number distinguished from a sequence number of each of the packet 1108 and the packet 1110. For example, the external electronic device 111 may transmit, to the electronic device 101, an ACK packet 1113 indicating that the packet 1112 is successfully received.

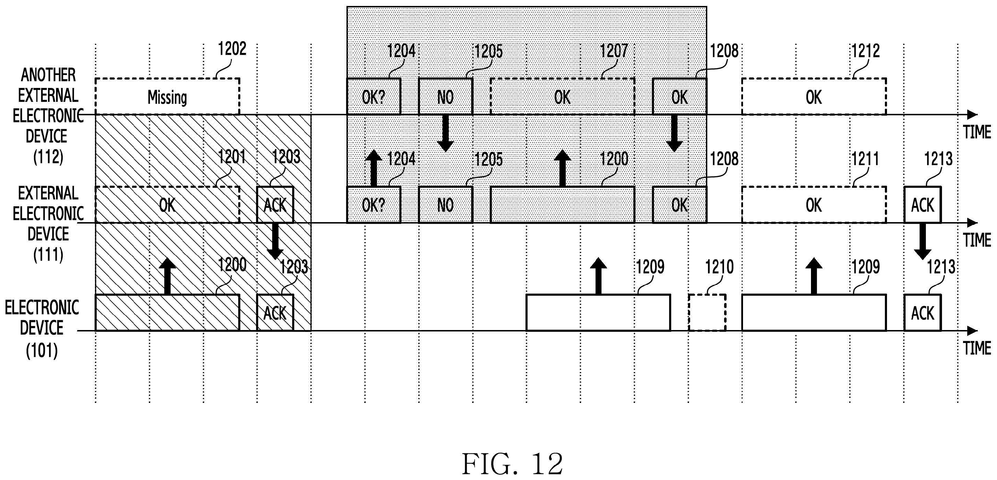

A method of transmitting an ACK packet and a non-acknowledgement packet exemplified in the above description may be variously implemented in the wireless environment 100. The method of transmitting an ACK packet and a non-acknowledgement packet is exemplified in the descriptions of FIGS. 12 to 14.

FIGS. 12 to 14 illustrate an exemplary method of transmitting an acknowledgement packet and a non-acknowledgement packet to an electronic device.

Referring to FIG. 12, the electronic device 101 may transmit a packet 1200 to the external electronic device 111 through the communication link 131, according to the above-exemplified methods. For example, the external electronic device 111 may successfully receive the packet 1200 from the electronic device 101 through the communication link 131, as indicated by an indication 1201. For example, in response to the packet 1200 from the electronic device 101, the external electronic device 111 may transmit, to the electronic device 101 through the communication link 131, an ACK packet 1203 indicating that the packet 1200 is successfully received. For example, the external electronic device 111 may transmit, to the electronic device 101 through the communication link 131, the ACK packet 1203 before checking whether another external electronic device 112 receives the packet 1200 by using the communication link 132. For example, the electronic device 101 may receive the ACK packet 1203 from the external electronic device 111 through the communication link 131.

For example, unlike the external electronic device 111, the another external electronic device 112 may not successfully receive the packet 1200, as indicated by an indication 1202. As a non-limiting example, the another external electronic device 112 may fail to sniff the packet 1200 transmitted from the electronic device 101 to the external electronic device 111 through the communication link 131.

For example, the external electronic device 111 may transmit, to the another external electronic device 112 through the communication link 132, a packet 1204 for checking whether the another external electronic device 112 receives the packet 1200, based on transmitting the ACK packet 1203 to the electronic device 101. For example, the another external electronic device 112 may receive the packet 1204 from the external electronic device 111 through the communication link 132.

For example, in response to the packet 1204, the another external electronic device 112 may transmit, to the external electronic device 111 through the communication link 132, a packet 1205 indicating failure to successfully receive the packet 1200. For example, the external electronic device 111 may receive the packet 1205 from the another external electronic device 112 through the communication link 132.

For example, in response to the packet 1205, the external electronic device 111 may transmit, to the another external electronic device 112 through the communication link 132, the packet 1200 received from the electronic device 101. For example, the another external electronic device 112 may successfully receive the packet 1200 from the external electronic device 111 through the communication link 132, as indicated by an indication 1207. For example, the another external electronic device 112 may transmit, to the external electronic device 111 through the communication link 132, a packet 1208 indicating that the packet 1200 is successfully received. For example, the external electronic device 111 may receive the packet 1208 from the another external electronic device 112 through the communication link 132.

Meanwhile, the electronic device 101 may transmit a packet 1209 to the external electronic device 111 through the communication link 131 according to the above-exemplified methods. For example, the external electronic device 111 may not receive the packet 1209 due to transmitting the packet 1200 to the another external electronic device 112. For example, since the packet 1209 is not received by the external electronic device 111, the external electronic device 111 may not transmit, to the electronic device 101, an ACK packet 1213 regarding the packet 1209 from the electronic device 101 and a non-acknowledgement packet regarding the packet 1209, as indicated by an indication 1210.

For example, the electronic device 101 may retransmit the packet 1209 to the external electronic device 111 through the communication link 131, based on checking that the ACK packet 1213 regarding the packet 1209 is not received. For example, the external electronic device 111 may successfully receive the packet 1209 from the external electronic device 111 through the communication link 131, as indicated by an indication 1211. For example, in response to the packet 1209 from the electronic device 101, the external electronic device 111 may transmit, to the electronic device 101 through the communication link 131, an ACK packet 1213 indicating that the packet 1209 is successfully received. For example, the external electronic device 111 may transmit the ACK packet 1213 to the electronic device 101 through the communication link 131 before checking whether the another external electronic device 112 receives the packet 1209 by using the communication link 132. For example, the electronic device 101 may receive the ACK packet 1213 from the external electronic device 111 through the communication link 131.

For example, the another external electronic device 112 may successfully receive the packet 1209 from the electronic device 101, as indicated by an indication 1212. As a non-limiting example, the another external electronic device 112 may sniff the packet 1209 transmitted from the electronic device 101 to the external electronic device 111 through the communication link 131.

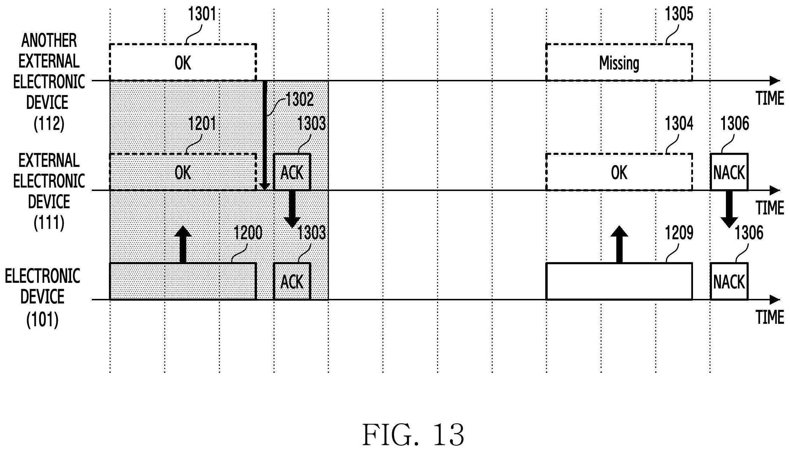

Referring to FIG. 13, the electronic device 101 may transmit the packet 1200 to the external electronic device 111 through the communication link 131, according to the above-exemplified methods. For example, the external electronic device 111 may successfully receive the packet 1200 from the electronic device 101 through the communication link 131, as indicated by an indication 1201. For example, the another external electronic device 112 may successfully receive the packet 1200, according to the above-exemplified methods, as indicated by an indication 1301. For example, in response to successfully receiving the packet 1200, the another external electronic device 112 may transmit, to the external electronic device 111 through the communication link 132, a signal 1302 indicating that the packet 1200 is successfully received. For example, based on the packet 1200 successfully received by the external electronic device 111 and the signal 1302, the external electronic device 111 may transmit, to the electronic device 101 through the communication link 131, an ACK packet 1303 regarding the packet 1200. For example, the electronic device 101 may receive the ACK packet 1303 from the external electronic device 111 through the communication link 131.

For example, the electronic device 101 may transmit, to the external electronic device 111 through the communication link 131, the packet 1209 according to the above-exemplified methods, based on receiving the ACK packet 1303. For example, the external electronic device 111 may successfully receive the packet 1209 from the electronic device 101 through the communication link 131, as indicated by an indication 1304. For example, unlike the external electronic device 111, the another external electronic device 112 may not successfully receive the packet 1209, as indicated by an indication 1305. As a non-limiting example, the another external electronic device 112 may fail to sniff the packet 1209 transmitted from the electronic device 101 to the external electronic device 111 through the communication link 131.

For example, whether the another external electronic device 112 has successfully received the packet 1209 may not be transmitted to the external electronic device 111, due to the another external electronic device 112 that has not successfully received the packet 1209. For example, the external electronic device 111 may transmit, to the electronic device 101 through the communication link 131, a non-acknowledgement packet 1306 regarding the packet 1209, based on checking that a signal from the another external electronic device 112, such as the signal 1302, is not received. For example, the external electronic device 111 may transmit the non-acknowledgement packet 1306 to the electronic device 101, based on determining that the packet 1209 is not normally received by both the external electronic device 111 and the another external electronic device 112.

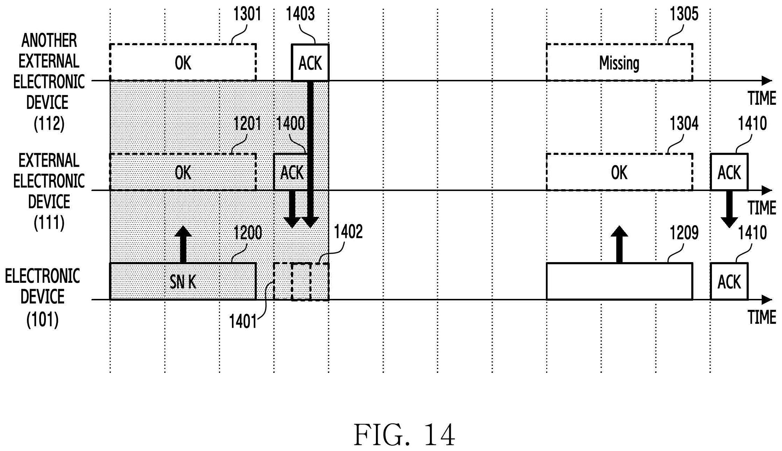

Referring to FIG. 14, the electronic device 101 may transmit, to the external electronic device 111 through the communication link 131, the packet 1200 according to the above-exemplified methods. For example, the external electronic device 111 may successfully receive, from the electronic device 101 through the communication link 131, the packet 1200, as indicated by an indication 1201. For example, the external electronic device 111 may transmit, to the electronic device 101 through the communication link 131, an ACK packet 1400 indicating that the packet 1200 is successfully received, in response to the packet 1200 from the electronic device 101. For example, the electronic device 101 may receive, from the external electronic device 111, the ACK packet 1400, as indicated by an indication 1401. For example, the another external electronic device 112 may successfully receive, from the electronic device 101, the packet 1200 according to the above-exemplified methods, as indicated by an indication 1301. For example, the another external electronic device 112 may transmit, to the electronic device 101, an ACK packet 1403 indicating that the packet 1200 is successfully received, in response to the packet 1200 from the electronic device 101. For example, the electronic device 101 may receive, from the another external electronic device 112, the ACK packet 1403, as indicated by an indication 1402. For example, unlike the operations exemplified in the descriptions of FIG. 12 and FIG. 13, the electronic device 101 may receive an ACK packet or a non-acknowledgement packet from each of the external electronic device 111 and the another external electronic device 112.

For example, the electronic device 101 may transmit, to the external electronic device 111 through the communication link 131, the packet 1209 according to the above-exemplified methods, in response to the ACK packet 1400 and the ACK packet 1403 respectively received from the external electronic device 111 and the another external electronic device 112. For example, the external electronic device 111 may successfully receive, from the external electronic device 111 through the communication link 131, the packet 1209, as indicated by an indication 1201. For example, the external electronic device 111 may transmit, to the electronic device 101 through the communication link 131, an ACK packet 1410 indicating that the packet 1209 is successfully received, in response to the packet 1209 from the electronic device 101. For example, the electronic device 101 may receive the ACK packet 1410 from the external electronic device 111. For example, the another external electronic device 112 may not successfully receive the packet 1209, according to the above-exemplified methods, as indicated by an indication 1305. For example, since the another external electronic device 112 has not successfully received the packet 1209, the another external electronic device 112 may not transmit an ACK packet regarding the packet 1209 to the electronic device 101.

Although not illustrated in FIG. 14, as a non-limiting example, since the electronic device 101 has not received the ACK packet regarding the packet 1209 from the another external electronic device 112, the electronic device 101 may execute retransmission of the packet 1209.

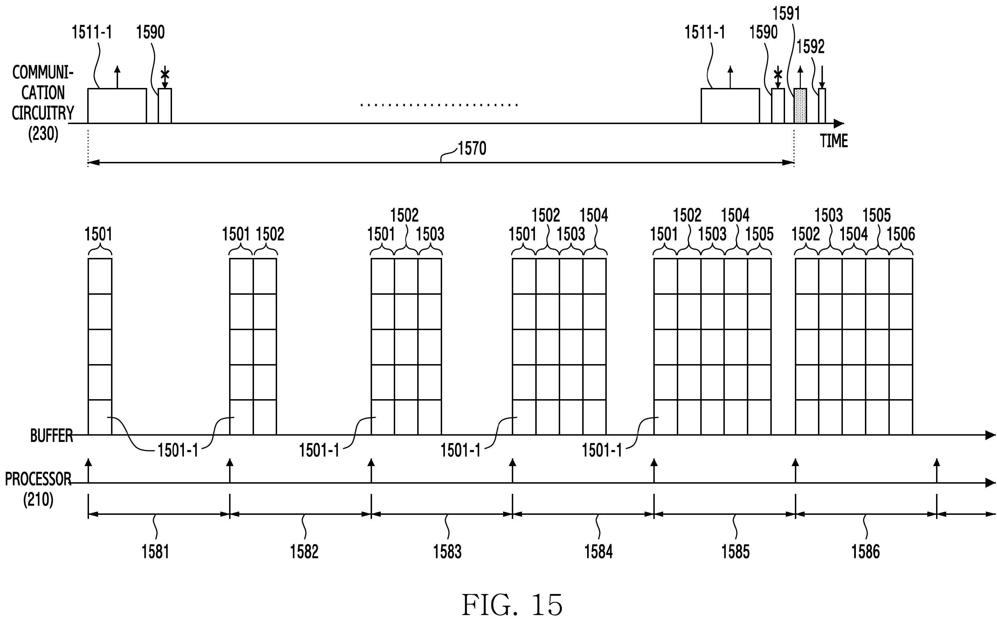

The above-exemplified methods for transmission of the packet may be executed through control of a buffer for the communication circuitry 230. The control of the buffer is exemplified in the descriptions of FIG. 15 to FIG. 18.

FIGS. 15 to 18 illustrate an exemplary method of controlling a buffer for adaptively changing another packet for transmission to an external electronic device according to a reception state of a packet transmitted to the external electronic device.

Referring to FIG. 15, the electronic device 101 may store, in a buffer for the communication circuitry 230, by using the processor 210, SDUs of a first set 1501 to be transmitted to the external electronic device 111 through the communication link 131 for an output of first audio, within a first SDU interval 1581. For example, the SDUs of the first set 1501 may have different priorities. For example, an SDU 1501-1 among the SDUs of the first set 1501may have a highest priority. For example, the SDU 1501-1 among the SDUs of the first set 1501 may include data mandatory for the output of the first audio. For example, the SDUs of the first set 1501 may be sequentially stored in the buffer according to priorities within the first SDU interval 1581. As another example, the SDUs of the first set 1501 may be simultaneously stored in the buffer within the first SDU interval 1581.

For example, the electronic device 101 may obtain, by using the communication circuitry 230, a packet 1511-1 corresponding to the SDU 1501-1. For example, the electronic device 101 may first transmit the packet 1511-1 to the external electronic device 111. For example, the external electronic device 111 may transmit, to the electronic device 101, a non-acknowledgement packet 1590 indicating that the packet 1511-1 is not successfully received, or may not transmit, to the electronic device 101, the non-acknowledgement packet 1590 regarding the packet 1511-1 due to non-reception of the packet 1511-1.

For example, the electronic device 101 may execute one or more retransmissions of the packet 1511-1, based on receiving the non-acknowledgement packet 1590 from the external electronic device 111 or not receiving, from the external electronic device 111, an ACK packet 1592 and the non-acknowledgement packet 1590. For example, the electronic device 101 may maintain the one or more retransmissions of the packet 1511-1 until an ACK packet regarding the packet 1511-1 is received, within a time interval 1570 corresponding to a flush timeout value of the packets of the first set (or the packet 1511-1).

For example, the electronic device 101 may store, in a buffer for the communication circuitry 230, by using the processor 210, SDUs of a second set 1502 to be transmitted to the external electronic device 111 through the communication link 131 for an output of second audio, within a second SDU interval 1582 next to the first SDU interval 1581. For example, a length of the second SDU interval 1582 may be identical to a length of the first SDU interval 1581. For example, the SDUs of the second set 1502 may have different priorities. For example, the SDUs of the second set 1502 may be stored while the ACK packet regarding the packet 1511-1 is not received.

For example, the electronic device 101 may store, in a buffer for the communication circuitry 230, by using the processor 210, SDUs of a third set 1503 to be transmitted to the external electronic device 111 through the communication link 131 for an output of third audio, within a third SDU interval 1583 next to the second SDU interval 1582. For example, a length of the third SDU interval 1583 may be identical to a length of the second SDU interval 1582. For example, the SDUs of the third set 1502 may have different priorities. For example, the SDUs of the third set 1503 may be stored while the ACK packet regarding the packet 1511-1 is not received.

For example, the electronic device 101 may store, in a buffer for the communication circuitry 230, by using the processor 210, SDUs of a fourth set 1504 to be transmitted to the external electronic device 111 through the communication link 131 for an output of fourth audio, within a fourth SDU interval 1584 next to the third SDU interval 1583. For example, a length of the fourth SDU interval 1584 may be identical to a length of the third SDU interval 1583. For example, the SDUs of the fourth set 1504 may have different priorities. For example, the SDUs of the fourth set 1504 may be stored while the ACK packet regarding the packet 1511-1 is not received.

For example, the electronic device 101 may store, in a buffer for the communication circuitry 230, by using the processor 210, SDUs of a fifth set 1505 to be transmitted to the external electronic device 111 through the communication link 131 for an output of fifth audio, within a fifth SDU interval 1585 next to the fourth SDU interval 1584. For example, a length of the fifth SDU interval 1585 may be identical to a length of the fourth SDU interval 1584. For example, the SDUs of the fifth set 1505 may have different priorities. For example, the SDUs of the fifth set 1505 may be stored while the ACK packet regarding the packet 1511-1 is not received.

For example, the electronic device 101 may transmit, to the external electronic device 111, a packet 1591 that replaces the packet 1511-1, has a sequence number of the packet 1511-1, and has a length of 0, based on the ACK packet regarding the packet 1511-1 that is not received until a termination timing of the time interval 1570. For example, the external electronic device 111 may transmit, to the electronic device 101 through the communication link 131, an ACK packet 1592 regarding the packet 1591, based on successfully receiving the packet 1591.

For example, the electronic device 101 may remove the SDUs of the first set 1501 from the buffer, based on the ACK packet regarding the packet 1511-1 that is not received until a termination timing of the time interval 1570.

For example, the electronic device 101 may store, in a buffer for the communication circuitry 230, by using the processor 210, SDUs of a sixth set 1506 to be transmitted to the external electronic device 111 through the communication link 131 for an output of sixth audio, within a sixth SDU interval 1586 next to the fifth SDU interval 1585. For example, a length of the sixth SDU interval 1586 may be identical to a length of the fifth SDU interval 1585. For example, the SDUs of the sixth set 1506 may have different priorities. As a non-limiting example, the SDUs of the sixth set 1506 may be stored after the SDUs of the first set 1501 are discarded.

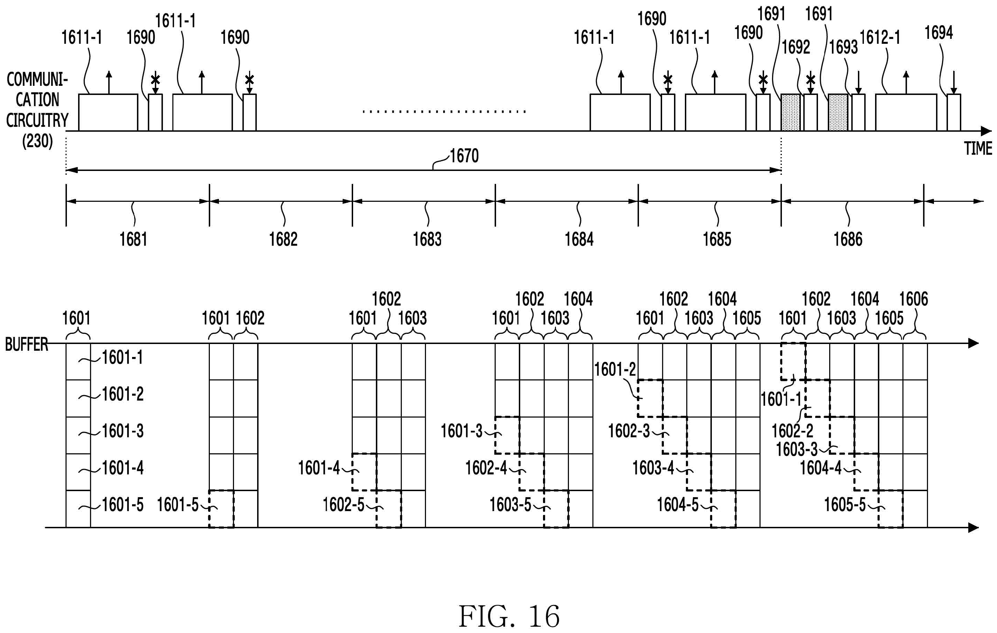

For example, the operations of FIG. 15 of discarding SDUs of a set based on a termination timing of the time interval 1570 may be replaced with another operation. For example, the electronic device 101 may sequentially discard SDUs of a set whenever not receiving an ACK packet regarding a packet transmitted from the electronic device 101 to the external electronic device 111. This operation is exemplified in the descriptions of FIG. 16.

Referring to FIG. 16, the electronic device 101 may store, in a buffer for the communication circuitry 230, by using the processor 210, SDUs of a first set 1601 to be transmitted to the external electronic device 111 through the communication link 131 for an output of first audio, within a first SDU interval 1681. For example, the SDUs of the first set 1601 may have different priorities. For example, an SDU 1601-1 among the SDUs of the first set 1601 may have a highest priority. For example, the SDU 1601-1 among the SDUs of the first set 1601 may include data mandatory for the output of the first audio. For example, the SDUs of the first set 1601 may have different flush timeout timings. For example, the SDUs of the first set 1601 may include an SDU 1601-1 to an SDU 1601-5. For example, the SDU 1601-5 may be flushed before the SDU 1601-1 to the SDU 1601-4 are flushed, the SDU 1601-4 may be flushed before the SDU 1601-1 to the SDU 1601-3 are flushed, the SDU 1601-3 may be flushed before the SDU 1601-1 to the SDU 1601-2 are flushed, and the SDU 1601-2 may be flushed before the SDU 1601-1 is flushed.

For example, the electronic device 101 may obtain, by using the communication circuitry 230, a packet 1611-1 corresponding to the SDU 1601-1. For example, the electronic device 101 may first transmit the packet 1611-1 to the external electronic device 111. For example, the external electronic device 111 may transmit, to the electronic device 101, a non-acknowledgement packet 1690 indicating that the packet 1611-1 is not successfully received, or may not transmit, to the electronic device 101, the non-acknowledgement packet 1690 regarding the packet 1611-1 due to non-reception of the packet 1611-1.

For example, the electronic device 101 may execute one or more retransmissions of the packet 1611-1, based on receiving the non-acknowledgement packet 1690 from the external electronic device 111 or not receiving, from the external electronic device 111, an ACK packet regarding the packet 1611-1 and the non-acknowledgement packet 1690. For example, the electronic device 101 may maintain the one or more retransmissions of the packet 1611-1 until an ACK packet regarding the packet 1611-1 is received, within a time interval 1670 corresponding to a flush timeout value of the packets of the first set (or the packet 1611-1).

For example, the electronic device 101 may discard the SDU 1601-5, in response to a flush timeout of the SDU 1601-5, within a second SDU interval 1682 having a length identical to a length of the first SDU interval 1681. For example, since an opportunity for transmission of a packet from the SDU 1601-5 has disappeared due to the ACK packet 1690 that is not received within the first SDU interval 1681, the electronic device 101 may discard the SDU 1601-5 within the second SDU interval 1682.

For example, the electronic device 101 may store, in a buffer for the communication circuitry 230, by using the processor 210, SDUs of a second set 1602 to be transmitted to the external electronic device 111 through the communication link 131 for an output of second audio, within the second SDU interval 1682. For example, the SDUs of the second set 1602 may have different priorities. For example, the SDUs of the second set 1602 may have different flush timeout timings. For example, a flush timeout timing of each of the SDUs of the second set 1602 may correspond to a flush timeout timing of each of the SDUs of the first set 1601.

For example, the electronic device 101 may discard an SDU 1601-4 and an SDU 1602-5, within a third SDU interval 1683 having a length identical to a length of the second SDU interval 1682, in response to a flush timeout of the SDU 1601-4 and a flush timeout of the SDU 1602-5 caused while an ACK packet 1690 according to the one or more retransmissions of the packet 1611-1 is not received. For example, since an opportunity for transmission of each of a packet from the SDU 1601-4 and a packet from the SDU 1602-5 has disappeared due to the ACK packet 1690 that is not received within the second SDU interval 1682, the electronic device 101 may discard the SDU 1601-4 and the SDU 1602-5 within the third SDU interval 1683.

For example, the electronic device 101 may store, in a buffer for the communication circuitry 230, by using the processor 210, SDUs of a third set 1603 to be transmitted to the external electronic device 111 through the communication link 131 for an output of third audio, within the third SDU interval 1683. For example, the SDUs of the third set 1603 may have different priorities. For example, the SDUs of the third set 1603 may have different flush timeout timings. For example, a flush timeout timing of each of the SDUs of the third set 1603 may correspond to a flush timeout timing of each of the SDUs of the first set 1601.

For example, the electronic device 101 may discard an SDU 1601-3, an SDU 1602-4, and an SDU 1603-5, within a fourth SDU interval 1684 having a length identical to a length of the third SDU interval 1683, in response to a flush timeout of the SDU 1601-3, a flush timeout of the SDU 1602-4, and a flush timeout of the SDU 1603-5 caused while the ACK packet 1690 according to the one or more retransmissions of the packet 1611-1 is not received. For example, since an opportunity for transmission of each of a packet from the SDU 1601-3, a packet from the SDU 1602-4, and a packet from the SDU 1603-5 has disappeared due to the ACK packet 1690 that is not received within the third SDU interval 1683, the electronic device 101 may discard the SDU 1601-3, the SDU 1602-4, and the SDU 1603-5 within the fourth SDU interval 1684.

For example, the electronic device 101 may store, in a buffer for the communication circuitry 230, by using the processor 210, SDUs of a fourth set 1604 to be transmitted to the external electronic device 111 through the communication link 131 for an output of fourth audio, within the fourth SDU interval 1684. For example, the SDUs of the fourth set 1604 may have different priorities. For example, the SDUs of the fourth set 1604 may have different flush timeout timings. For example, a flush timeout timing of each of the SDUs of the fourth set 1604 may correspond to a flush timeout timing of each of the SDUs of the first set 1601.

For example, the electronic device 101 may discard an SDU 1601-2, an SDU 1602-3, an SDU 1603-4, and an SDU 1604-5, within a fifth SDU interval 1685 having a length identical to a length of the fourth SDU interval 1684, in response to a flush timeout of the SDU 1601-2, a flush timeout of the SDU 1602-3, a flush timeout of the SDU 1603-4, and a flush timeout of the SDU 1604-5 caused while the ACK packet 1690 according to the one or more retransmissions of the packet 1611-1 is not received. For example, since an opportunity for transmission of each of a packet from the SDU 1601-2 a packet from the SDU 1602-3, a packet from the SDU 1603-4, and a packet from the SDU 1604-5 has disappeared due to the ACK packet 1690 that is not received within the fourth SDU interval 1684, the electronic device 101 may discard the SDU 1601-2, the SDU 1602-3, the SDU 1603-4, and the SDU 1604-5 within the fifth SDU interval 1685.

For example, the electronic device 101 may store, in a buffer for the communication circuitry 230, by using the processor 210, SDUs of a fifth set 1605 to be transmitted to the external electronic device 111 through the communication link 131 for an output of fifth audio, within the fifth SDU interval 1685. For example, the SDUs of the fifth set 1605 may have different priorities. For example, the SDUs of the fifth set 1605 may have different flush timeout timings. For example, a flush timeout timing of each of the SDUs of the fifth set 1605 may correspond to a flush timeout timing of each of the SDUs of the first set 1601.

For example, the electronic device 101 may discard an SDU 1601-1, an SDU 1602-2, an SDU 1603-3, an SDU 1604-4, and an SDU 1605-5, within a sixth SDU interval 1686 having a length identical to a length of the fifth SDU interval 1685, in response to a flush timeout of the SDU 1601-1, a flush timeout of the SDU 1602-2, a flush timeout of the SDU 1603-3, a flush timeout of the SDU 1604-4, and a flush timeout of the SDU 1605-5 caused while the ACK packet 1690 according to the one or more retransmissions of the packet 1611-1 is not received. For example, since an opportunity for transmission of each of a packet from the SDU 1601-1, a packet from the SDU 1602-2, a packet from the SDU 1603-3, a packet from the SDU 1604-4, and a packet from the SDU 1605-5 has disappeared due to the ACK packet 1690 that is not received within the fifth SDU interval 1685, the electronic device 101 may discard the SDU 1601-1, the SDU 1602-2, the SDU 1603-3, the SDU 1604-4, and the SDU 1605-5 within the sixth SDU interval 1686.

For example, the electronic device 101 may store, in a buffer for the communication circuitry 230, by using the processor 210, SDUs of a sixth set 1606 to be transmitted to the external electronic device 111 through the communication link 131 for an output of sixth audio, within the sixth SDU interval 1686. For example, the SDUs of the sixth set 1606 may have different priorities. For example, the SDUs of the sixth set 1606 may have different flush timeout timings. For example, a flush timeout timing of each of the SDUs of the sixth set 1606 may correspond to a flush timeout timing of each of the SDUs of the first set 1601.

For example, the electronic device 101 may transmit, to the external electronic device 111, a packet 1691 that replaces the packet 1611-1, has a sequence number of the packet 1611-1, and has a length of 0, in response to a flush timeout of the SDU 1601-1 caused while the ACK packet 1690 according to the one or more retransmissions of the packet 1611-1 is not received. For example, the external electronic device 111 may transmit, to the electronic device 101, a non-acknowledgement packet 1692 indicating that the packet 1691 is not successfully received, or may not transmit, to the electronic device 101, the non-acknowledgement packet 1692 due to non-reception of the packet 1691.

For example, the electronic device 101 may execute retransmission of the packet 1691, based on receiving the non-acknowledgement packet 1692 or not receiving the non-acknowledgement packet 1692. For example, the external electronic device 111 may transmit, to the electronic device 101, an ACK packet 1693 indicating that the packet 1691 is successfully received, based on receiving the packet 1691 retransmitted from the electronic device 101.

For example, the electronic device 101 may transmit, to the external electronic device 111 within the sixth SDU interval 1686, a packet 1612-1 from the SDU 1602-1, based on receiving the ACK packet 1693 within the sixth SDU interval 1686. For example, the external electronic device 111 may transmit, to the electronic device 101, an ACK packet 1694 indicating that the packet 1612-1 is successfully received, based on receiving the packet 1612-1 transmitted from the electronic device 101.

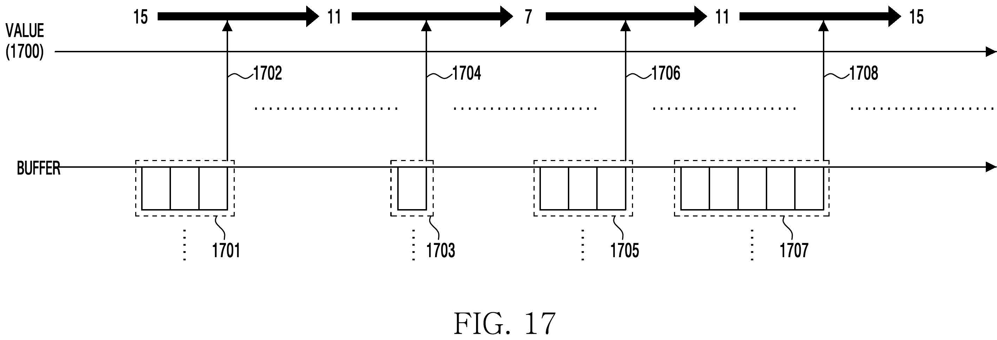

For example, the electronic device 101 may adjust a priority of a task for the audio service, according to the number of SDUs including data mandatory for an output of audio, while providing the audio service by using the external electronic device 111. This operation is exemplified in the description of FIG. 17.

Referring to FIG. 17, the electronic device 101 may adjust the priority of the task for the audio service, according to the number of SDUs, including data mandatory for an output of audio, stored in the buffer for the communication circuitry 230, while providing the audio service by using the external electronic device 111.

For example, the electronic device 101 may check that the number of SDUs, stored in the buffer, including data mandatory for an output of audio, is 3, while the audio service is provided, as indicated by an indication 1701. As a non-limiting example, based on checking that the number is 3, the electronic device 101 may change a value 1700 indicating the priority of the task from 15 to 11 to lower the priority of the task, as indicated by an arrow 1702.

For example, while the audio service is provided with the priority corresponding to the value 1700, which is 11, the electronic device 101 may check that the number is 1, as indicated by an indication 1703. As a non-limiting example, based on checking that the number is 1 (or checking a decrease of the number), the electronic device 101 may change the value 1700 from 11 to 7 to lower the priority of the task, as indicated by an arrow 1704.

For example, while the audio service is provided with the priority corresponding to the value 1700, which is 7, the electronic device 101 may check that the number is 3, as indicated by an indication 1705. As a non-limiting example, based on checking that the number is 3 (or checking an increase of the number), the electronic device 101 may change the value 1700 from 7 to 11 to raise the priority of the task, as indicated by an arrow 1706.

For example, while the audio service is provided with the priority corresponding to a value 1700, which is 11, the electronic device 101 may check that the number is 5, as indicated by an indication 1707. As a non-limiting example, based on checking that the number is 5 (or checking an increase of the number), the electronic device 101 may change the value 1700 from 11 to 15 to raise the priority of the task, as indicated by an arrow 1708.

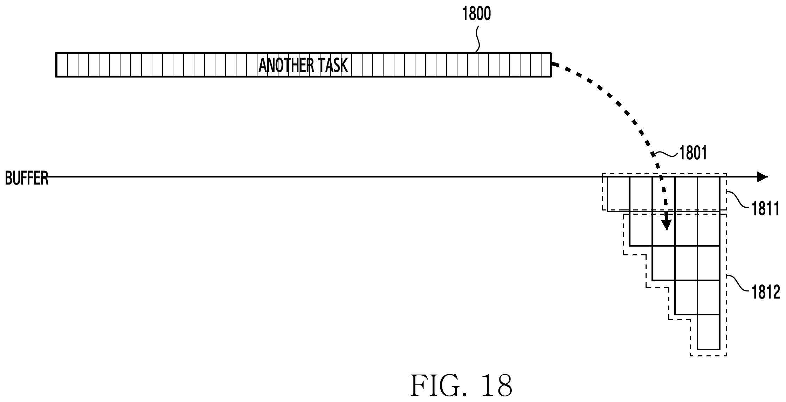

For example, the electronic device 101 may discard SDUs, stored in the buffer for the communication circuitry 230, including data optional for an output of audio, in response to occurrence of another task having a priority higher than the priority of the task for the audio service. This operation is exemplified in the description of FIG. 18.

Referring to FIG. 18, the electronic device 101 may check occurrence of another task 1800 having a priority higher than the priority of the task for the audio service, while the audio service is provided. For example, the another task 1800 may be interference with the task. For example, the another task 1800 may include transmitting or receiving a signal on a frequency (or a frequency band) corresponding to a frequency (or a frequency band) of packets for the audio service. For example, the another task 1800 may be a task executed through Wi-Fi, and/or a task executed through Bluetooth.

For example, in response to detecting another task 1800 having a priority higher than the priority of the task, the electronic device 101 may discard, from among SDUs stored in the buffer for the communication circuitry 230, SDUs 1812 including data optional for an output of audio, as indicated by an arrow 1801. For example, the electronic device 101 may maintain storing, from among SDUs stored in the buffer for the communication circuitry 230, SDUs 1811 including data mandatory for an output of audio, to maintain providing the audio service.

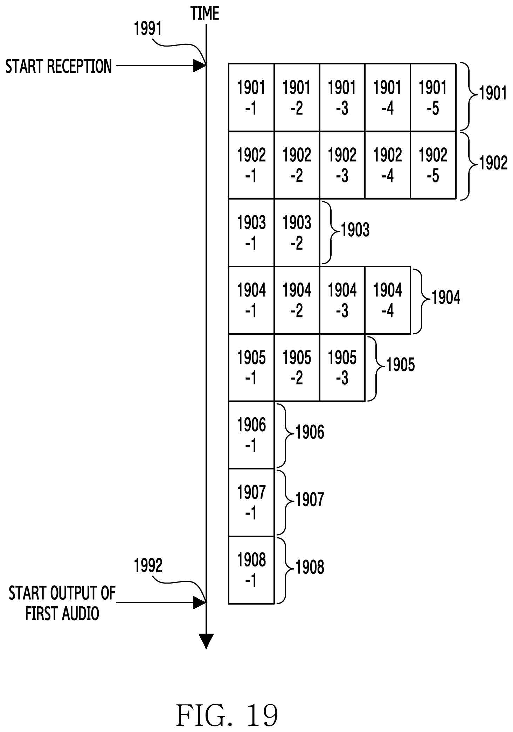

The external electronic device 111 may decode packets received according to the above-exemplified transmission of the electronic device 101, to provide the audio service. The decoding is exemplified in the descriptions of FIG. 19.

FIG. 19 illustrates an exemplary method of decoding packets received from an electronic device in an external electronic device.

Referring to FIG. 19, the external electronic device 111 may receive, from the electronic device 101 through the communication link 131, all of packets of a first set for an output of first audio, at a timing 1991. For example, all of the packets of the first set may be stored in a buffer within the external electronic device 111 used for the audio service. For example, the external electronic device 111 may store, in the buffer, data of a first set 1901 respectively corresponding to the packets of the first set. For example, the data of the first set 1901 may include data 1901-1 having a first priority, data 1901-2 having a second priority lower than the first priority, data 1901-3 having a third priority lower than the second priority, data 1901-4 having a fourth priority lower than the third priority, and data 1901-5 having a fifth priority lower than the fourth priority.

For example, the external electronic device 111 may receive, from the electronic device 101 through the communication link 131, all of packets of a second set for an output of second audio next to the first audio. For example, all of the packets of the second set may be stored in a buffer within the external electronic device 111 used for the audio service. For example, the external electronic device 111 may store, in the buffer, data of a second set 1902 respectively corresponding to the packets of the second set. For example, the data of the second set 1902 may include data 1902-1 having the first priority, data 1902-2 having the second priority lower than the first priority, data 1902-3 having the third priority lower than the second priority, data 1902-4 having the fourth priority lower than the third priority, and data 1902-5 having the fifth priority lower than the fourth priority.

For example, the external electronic device 111 may receive, from the electronic device 101 through the communication link 131, a portion of packets of a third set for an output of third audio next to the second audio. For example, the portion of the packets of the third set may be stored in a buffer within the external electronic device 111 used for the audio service. For example, the external electronic device 111 may store, in the buffer, data of a third set 1903 corresponding to the portion of the packets of the third set. For example, the data of the first set 1903 may include data 1903-1 having the first priority and data 1903-2 having the second priority lower than the first priority.

For example, the external electronic device 111 may receive, from the electronic device 101 through the communication link 131, a portion of packets of a fourth set for an output of fourth audio next to the third audio. For example, the portion of the packets of the fourth set may be stored in a buffer within the external electronic device 111 used for the audio service. For example, the external electronic device 111 may store, in the buffer, data of a fourth set 1904 corresponding to the portion of the packets of the fourth set. For example, the data of the fourth set 1904 may include data 1904-1 having the first priority, data 1904-2 having the second priority lower than the first priority, data 1904-3 having the third priority lower than the second priority, and data 1904-4 having the fourth priority lower than the third priority.

For example, the external electronic device 111 may receive, from the electronic device 101 through the communication link 131, a portion of packets of a fifth set for an output of fifth audio next to the fourth audio. For example, the portion of the packets of the fifth set may be stored in a buffer within the external electronic device 111 used for the audio service. For example, the external electronic device 111 may store, in the buffer, data of a fifth set 1905 corresponding to the portion of the packets of the fifth set. For example, the data of the fifth set 1905 may include data 1905-1 having the first priority, data 1905-2 having the second priority lower than the first priority, and data 1905-3 having the third priority lower than the second priority.

For example, the external electronic device 111 may receive, from the electronic device 101 through the communication link 131, a portion of packets of a sixth set for an output of sixth audio next to the fifth audio. For example, the portion of the packets of the sixth set may be stored in a buffer within the external electronic device 111 used for the audio service. For example, the external electronic device 111 may store, in the buffer, data of a sixth set 1906 corresponding to the portion of the packets of the sixth set. For example, the data of the sixth set 1906 may include only data 1906-1 having the first priority.

For example, the external electronic device 111 may receive, from the electronic device 101 through the communication link 131, a portion of packets of a seventh set for an output of seventh audio next to the sixth audio. For example, the portion of the packets of the seventh set may be stored in a buffer within the external electronic device 111 used for the audio service. For example, the external electronic device 111 may store, in the buffer, data of a seventh set 1907 corresponding to the portion of the packets of the seventh set. For example, the data of the seventh set 1907 may include only data 1907-1 having the first priority.

For example, the external electronic device 111 may receive, from the electronic device 101 through the communication link 131, a portion of packets of an eighth set for an output of eighth audio next to the seventh audio. For example, the portion of the packets of the eighth set may be stored in a buffer within the external electronic device 111 used for the audio service. For example, the external electronic device 111 may store, in the buffer, data of an eighth set 1908 corresponding to the portion of the packets of the eighth set. For example, the data of the eighth set 1908 may include only data 1908-1 having the first priority.

For example, the external electronic device 111 may initiate an output of the first audio at a timing 1992. For example, the external electronic device 111 may output the first audio, based on decoding data of the first set 1901.

For example, the external electronic device 111 may output the second audio, based on decoding data of the second set 1902. For example, the external electronic device 111 may output the third audio, based on decoding data of the third set 1903. For example, the external electronic device 111 may output the fourth audio, based on decoding data of the fourth set 1904. For example, the external electronic device 111 may output the fifth audio, based on decoding data of the fifth set 1905. For example, the external electronic device 111 may output the sixth audio, based on decoding data of the sixth set 1906. For example, the external electronic device 111 may output the seventh audio, based on decoding data of the seventh set 1907. For example, the external electronic device 111 may output the eighth audio, based on decoding data of the eighth set 1908.

For example, since all of data of the first set 1901 to data of the eighth set 1908 include data having the first priority, the external electronic device 111 may output the first audio to the eighth audio without audio interruption.

The above-exemplified operations of the electronic device 101 may be executed by an electronic device 2001 exemplified in the descriptions of FIG. 20. The above-exemplified operations of the external electronic device 111 may be executed by an electronic device 2002 exemplified in the descriptions of FIG. 20.

FIG. 20 is a block diagram illustrating an electronic device 2001 in a network environment 2000 according to various embodiments. Referring to FIG. 20, the electronic device 2001 in the network environment 2000 may communicate with an electronic device 2002 via a first network 2098 (e.g., a short-range wireless communication network), or at least one of an electronic device 2004 or a server 2008 via a second network 2099 (e.g., a long-range wireless communication network). According to an embodiment, the electronic device 2001 may communicate with the electronic device 2004 via the server 2008. According to an embodiment, the electronic device 2001 may include a processor 2020, memory 2030, an input module 2050, a sound output module 2055, a display module 2060, an audio module 2070, a sensor module 2076, an interface 2077, a connecting terminal 2078, a haptic module 2079, a camera module 2080, a power management module 2088, a battery 2089, a communication module 2090, a subscriber identification module(SIM) 2096, or an antenna module 2097. In some embodiments, at least one of the components (e.g., the connecting terminal 2078) may be omitted from the electronic device 2001, or one or more other components may be added in the electronic device 2001. In some embodiments, some of the components (e.g., the sensor module 2076, the camera module 2080, or the antenna module 2097) may be implemented as a single component (e.g., the display module 2060).

The processor 2020 may execute, for example, software (e.g., a program 2040) to control at least one other component (e.g., a hardware or software component) of the electronic device 2001 coupled with the processor 2020, and may perform various data processing or computation. According to an embodiment, as at least part of the data processing or computation, the processor 2020 may store a command or data received from another component (e.g., the sensor module 2076 or the communication module 2090) in volatile memory 2032, process the command or the data stored in the volatile memory 2032, and store resulting data in non-volatile memory 2034. According to an embodiment, the processor 2020 may include a main processor 2021 (e.g., a central processing unit (CPU) or an application processor (AP)), or an auxiliary processor 2023 (e.g., a graphics processing unit (GPU), a neural processing unit (NPU), an image signal processor (ISP), a sensor hub processor, or a communication processor (CP)) that is operable independently from, or in conjunction with, the main processor 2021. For example, when the electronic device 2001 includes the main processor 2021 and the auxiliary processor 2023, the auxiliary processor 2023 may be adapted to consume less power than the main processor 2021, or to be specific to a specified function. The auxiliary processor 2023 may be implemented as separate from, or as part of the main processor 2021.

The auxiliary processor 2023 may control at least some of functions or states related to at least one component (e.g., the display module 2060, the sensor module 2076, or the communication module 2090) among the components of the electronic device 2001, instead of the main processor 2021 while the main processor 2021 is in an inactive (e.g., sleep) state, or together with the main processor 2021 while the main processor 2021 is in an active state (e.g., executing an application). According to an embodiment, the auxiliary processor 2023 (e.g., an image signal processor or a communication processor) may be implemented as part of another component (e.g., the camera module 2080 or the communication module 2090) functionally related to the auxiliary processor 2023. According to an embodiment, the auxiliary processor 2023 (e.g., the neural processing unit) may include a hardware structure specified for artificial intelligence model processing. An artificial intelligence model may be generated by machine learning. Such learning may be performed, e.g., by the electronic device 2001 where the artificial intelligence is performed or via a separate server (e.g., the server 2008). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 2030 may store various data used by at least one component (e.g., the processor 2020 or the sensor module 2076) of the electronic device 2001. The various data may include, for example, software (e.g., the program 2040) and input data or output data for a command related thereto. The memory 2030 may include the volatile memory 2032 or the non-volatile memory 2034.

The program 2040 may be stored in the memory 2030 as software, and may include, for example, an operating system (OS) 2042, middleware 2044, or an application 2046.

The input module 2050 may receive a command or data to be used by another component (e.g., the processor 2020) of the electronic device 2001, from the outside (e.g., a user) of the electronic device 2001. The input module 2050 may include, for example, a microphone, a mouse, a keyboard, a key (e.g., a button), or a digital pen (e.g., a stylus pen).

The sound output module 2055 may output sound signals to the outside of the electronic device 2001. The sound output module 2055 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 2060 may visually provide information to the outside (e.g., a user) of the electronic device 2001. The display module 2060 may include, for example, a display, a hologram device, or a projector and control circuitry to control a corresponding one of the display, hologram device, and projector. According to an embodiment, the display module 2060 may include a touch sensor adapted to detect a touch, or a pressure sensor adapted to measure the intensity of force incurred by the touch.

The audio module 2070 may convert a sound into an electrical signal and vice versa. According to an embodiment, the audio module 2070 may obtain the sound via the input module 2050, or output the sound via the sound output module 2055 or a headphone of an external electronic device (e.g., an electronic device 2002) directly (e.g., wiredly) or wirelessly coupled with the electronic device 2001.

The sensor module 2076 may detect an operational state (e.g., power or temperature) of the electronic device 2001 or an environmental state (e.g., a state of a user) external to the electronic device 2001, and then generate an electrical signal or data value corresponding to the detected state. According to an embodiment, the sensor module 2076 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 2077 may support one or more specified protocols to be used for the electronic device 2001 to be coupled with the external electronic device (e.g., the electronic device 2002) directly (e.g., wiredly) or wirelessly. According to an embodiment, the interface 2077 may include, for example, a high definition multimedia interface (HDMI), a universal serial bus (USB) interface, a secure digital (SD) card interface, or an audio interface.

A connecting terminal 2078 may include a connector via which the electronic device 2001 may be physically connected with the external electronic device (e.g., the electronic device 2002). According to an embodiment, the connecting terminal 2078 may include, for example, an HDMI connector, a USB connector, an SD card connector, or an audio connector (e.g., a headphone connector).

The haptic module 2079 may convert an electrical signal into a mechanical stimulus (e.g., a vibration or a movement) or electrical stimulus which may be recognized by a user via his tactile sensation or kinesthetic sensation. According to an embodiment, the haptic module 2079 may include, for example, a motor, a piezoelectric element, or an electric stimulator.

The camera module 2080 may capture a still image or moving images. According to an embodiment, the camera module 2080 may include one or more lenses, image sensors, image signal processors, or flashes.

The power management module 2088 may manage power supplied to the electronic device 2001. According to an embodiment, the power management module 2088 may be implemented as at least part of, for example, a power management integrated circuit (PMIC).

The battery 2089 may supply power to at least one component of the electronic device 2001. According to an embodiment, the battery 2089 may include, for example, a primary cell which is not rechargeable, a secondary cell which is rechargeable, or a fuel cell.

The communication module 2090 may support establishing a direct (e.g., wired) communication channel or a wireless communication channel between the electronic device 2001 and the external electronic device (e.g., the electronic device 2002, the electronic device 2004, or the server 2008) and performing communication via the established communication channel. The communication module 2090 may include one or more communication processors that are operable independently from the processor 2020 (e.g., the application processor (AP)) and supports a direct (e.g., wired) communication or a wireless communication. According to an embodiment, the communication module 2090 may include a wireless communication module 2092 (e.g., a cellular communication module, a short-range wireless communication module, or a global navigation satellite system (GNSS) communication module) or a wired communication module 2094 (e.g., a local area network (LAN) communication module or a power line communication (PLC) module). A corresponding one of these communication modules may communicate with the external electronic device via the first network 2098 (e.g., a short-range communication network, such as Bluetooth^{™}, wireless-fidelity (Wi-Fi) direct, or infrared data association (IrDA)) or the second network 2099 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 2092 may identify and authenticate the electronic device 2001 in a communication network, such as the first network 2098 or the second network 2099, using subscriber information (e.g., international mobile subscriber identity (IMSI)) stored in the subscriber identification module 2096.

The wireless communication module 2092 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 2092 may support a high-frequency band (e.g., the mmWave band) to achieve, e.g., a high data transmission rate. The wireless communication module 2092 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 2092 may support various requirements specified in the electronic device 2001, an external electronic device (e.g., the electronic device 2004), or a network system (e.g., the second network 2099). According to an embodiment, the wireless communication module 2092 may support a peak data rate (e.g., 20Gbps or more) for implementing eMBB, loss coverage (e.g., 2064dB or less) for implementing mMTC, or U-plane latency (e.g., 0.5ms or less for each of downlink (DL) and uplink (UL), or a round trip of 20ms or less) for implementing URLLC.

The antenna module 2097 may transmit or receive a signal or power to or from the outside (e.g., the external electronic device) of the electronic device 2001. According to an embodiment, the antenna module 2097 may include an antenna including a radiating element composed of a conductive material or a conductive pattern formed in or on a substrate (e.g., a printed circuit board (PCB)). According to an embodiment, the antenna module 2097 may include a plurality of antennas (e.g., array antennas). In such a case, at least one antenna appropriate for a communication scheme used in the communication network, such as the first network 2098 or the second network 2099, may be selected, for example, by the communication module 2090 (e.g., the wireless communication module 2092) from the plurality of antennas. The signal or the power may then be transmitted or received between the communication module 2090 and the external electronic device via the selected at least one antenna. According to an embodiment, another component (e.g., a radio frequency integrated circuit (RFIC)) other than the radiating element may be additionally formed as part of the antenna module 2097.

According to various embodiments, the antenna module 2097 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 2001 and the external electronic device 2004 via the server 2008 coupled with the second network 2099. Each of the electronic devices 2002 or 2004 may be a device of a same type as, or a different type, from the electronic device 2001. According to an embodiment, all or some of operations to be executed at the electronic device 2001 may be executed at one or more of the external electronic devices 2002, 2004, or 2008. For example, if the electronic device 2001 should perform a function or a service automatically, or in response to a request from a user or another device, the electronic device 2001, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 2001. The electronic device 2001 may provide the outcome, with or without further processing of the outcome, as at least part of a reply to the request. To that end, a cloud computing, distributed computing, mobile edge computing (MEC), or client-server computing technology may be used, for example. The electronic device 2001 may provide ultra low-latency services using, e.g., distributed computing or mobile edge computing. In another embodiment, the external electronic device 2004 may include an internet-of-things (IoT) device. The server 2008 may be an intelligent server using machine learning and/or a neural network. According to an embodiment, the external electronic device 2004 or the server 2008 may be included in the second network 2099. The electronic device 2001 may be applied to intelligent services (e.g., smart home, smart city, smart car, or healthcare) based on 5G communication technology or IoT-related technology.

As described above, an electronic device (e.g., the electronic device 101) in a wireless environment may comprise communication circuitry for Bluetooth (e.g., the communication circuitry 230) and a processor (e.g., the processor 210). The processor may be configured to first transmit, by using the communication circuitry, from among packets of a first set to be sequentially transmitted for an output of first audio through a communication link between the electronic device and an external electronic device to the external electronic device, a first packet including data mandatory for the output of the first audio, based on receiving, before a flush timeout of the first packet, an acknowledgement (ACK) packet regarding the first packet from the external electronic device, transmit, by using the communication circuitry, from among one or more remaining packets of the first set, a second packet including data optional for the output of the first audio, and based on not receiving, until the flush timeout of the first packet, the ACK packet from the external electronic device, cancel transmitting the packets of the first set, and first transmit, by using the communication circuitry, from among packets of a second set to be sequentially transmitted for an output of second audio next to the first audio through the communication link to the external electronic device, a third packet including data mandatory for the output of the second audio.

For example, the processor may be configured to check whether receiving the ACK packet before the flush timeout of the first packet.

For example, the processor may be configured to cancel transmitting the packets of the first set in accordance with discarding the second packet before the flush timeout of the first packet and discarding the first packet in response to the flush timeout of the first packet.

For example, the processor may be configured to check, using a flush timeout value set with respect to the first packet, whether receiving the ACK packet before the flush timeout of the first packet.

For example, the processor may be configured to refrain from transmitting the one or more remaining packets of the first set until the ACK packet is received from the external electronic device.

For example, transmitting the one or more remaining packets of the first set may be executed on a condition that the ACK packet is received from the external electronic device. For example, transmitting the one or more remaining packets of the first set may be allowed on a condition that the ACK packet is received from the external electronic device.

For example, the processor may be configured to, based on not receiving the ACK packet from the external electronic device until the flush timeout of the first packet, transmit, by using the communication circuitry, through the communication link to the external electronic device, a packet that has a sequence number of the first packet, has a length of 0, and replaces the first packet, and, based on receiving the ACK packet for the packet through the communication link from the external electronic device, first transmit the third packet with a sequence number different from the sequence number of the first packet from among the packets of the second set.

For example, a logical link identifier (LLID) code in a payload header of the packet may be '0b01'.

For example, the processor may be configured to, before the first packet is transmitted, transmit, by using the communication circuitry, through the communication link to the external electronic device, at least one of information regarding a codec used for generating the packets of the first set, information regarding a number of the packets of the first set, information regarding a bit rate used for respectively generating the packets of the first set, or information regarding the time.

For example, a bit rate for a service data unit (SDU) used for generating the first packet may be identical to a bit rate for a second SDU used for generating the third packet.

For example, a flush timeout value of the second packet may be less than a flush timeout value of the first packet.

For example, the one or more remaining packets of the first set may be usable for enhancing a quality of the first audio outputted through the external electronic device.

For example, each of the packets of the first set and the packets of the second set may be for outputting each of the first audio and the second audio by using the external electronic device through an advanced audio distribution profile (A2DP).

For example, the communication link may comprise an asynchronous connection-less (ACL) link.

For example, the processor may be configured to store, within a first service data unit (SDU) interval, SDUs of a first set used for generating the packets of the first set in a buffer for the communication circuitry, and store, within a second SDU interval next to the first SDU interval, SDUs of a second set used for generating the packets of the second set in the buffer. For example, a length of the first SDU interval may be identical to a length of the second SDU interval.

For example, a portion of the SDUs of the first set stored in the buffer may be discarded in accordance with reduction of a priority of the output of the first audio. For example, a portion of the SDUs of the second set stored in the buffer may be discarded in accordance with reduction of a priority of the output of the second audio.

As described above, a method may be executed in an electronic device in a wireless environment with communication circuitry for Bluetooth (e.g., the communication circuitry 230). The method may comprise first transmitting, by using communication circuitry of the electronic device, from among packets of a first set to be sequentially transmitted for an output of first audio through a communication link between the electronic device and an external electronic device to the external electronic device, a first packet including data mandatory for the output of the first audio, based on receiving, before a flush timeout of the first packet, an acknowledgement (ACK) packet regarding the first packet from the external electronic device, transmitting, by using the communication circuitry, from among one or more remaining packets of the first set, a second packet including data optional for the output of the first audio, and based on not receiving, until the flush timeout of the first packet, the ACK packet from the external electronic device, canceling to transmit the packets of the first set, and first transmitting, by using the communication circuitry, from among packets of a second set to be sequentially transmitted for an output of second audio next to the first audio through the communication link to the external electronic device, a third packet including data mandatory for the output of the second audio.

For example, the method may comprise checking whether receiving the ACK packet before the flush timeout of the first packet.

For example, canceling to transmit the packets of the first set may comprise canceling to transmit the packets of the first set in accordance with discarding the second packet before the flush timeout of the first packet and discarding the first packet in response to the flush timeout of the first packet.

For example, checking whether receiving the ACK packet before the flush timeout of the first packet may comprise checking, using a flush timeout value set with respect to the first packet, whether receiving the ACK packet before the flush timeout of the first packet.

As described above, a non-transitory computer readable storage medium may store one or more programs. For example, the one or more programs may comprise instructions to, when executed by an electronic device (e.g., the electronic device 101) including communication circuitry for Bluetooth (e.g., the communication circuitry 230), cause the electronic device to first transmit, by using the communication circuitry, from among packets of a first set to be sequentially transmitted for an output of first audio through a communication link between the electronic device and an external electronic device to the external electronic device, a first packet including data mandatory for the output of the first audio, based on receiving, before a flush timeout of the first packet, an acknowledgement (ACK) packet regarding the first packet from the external electronic device, transmit, by using the communication circuitry, from among one or more remaining packets of the first set, a second packet including data optional for the output of the first audio, and based on not receiving, until the flush timeout of the first packet, the ACK packet from the external electronic device, cancel transmitting the packets of the first set, and transmit, by using the communication circuitry, from among packets of a second set to be sequentially transmitted for an output of second audio next to the first audio through the communication link to the external electronic device, a third packet including data mandatory for the output of the second audio.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 2040) including one or more instructions that are stored in a storage medium (e.g., internal memory 2036 or external memory 2038) that is readable by a machine (e.g., the electronic device 2001). For example, a processor (e.g., the processor 2020) of the machine (e.g., the electronic device 2001) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™} ), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device comprising:
communication circuitry for Bluetooth;
at least one processor including processing circuitry; and
memory storing instructions that, when executed by the at least one processor individually and/or collectively, cause the electronic device to:
first transmit, by using the communication circuitry, from among packets of a first set to be sequentially transmitted for an output of first audio through a communication link between the electronic device and an external electronic device to the external electronic device, a first packet including data mandatory for the output of the first audio,
based on receiving, before a flush timeout of the first packet, an acknowledgement (ACK) packet regarding the first packet from the external electronic device, transmit, by using the communication circuitry, from among one or more remaining packets of the first set, a second packet including data optional for the output of the first audio, and
based on not receiving, until the flush timeout of the first packet, the ACK packet from the external electronic device:
cancel transmitting the packets of the first set; and
transmit, by using the communication circuitry, from among packets of a second set to be sequentially transmitted for an output of second audio next to the first audio through the communication link to the external electronic device, a third packet including data mandatory for the output of the second audio.

2. The electronic device of claim 1, wherein the instructions, when executed by the at least one processor individually and/or collectively, cause the electronic device to:
check whether receiving the ACK packet before the flush timeout of the first packet;
based on receiving the ACK packet before the flush timeout of the first packet, transmit the second packet; and
based on not receiving the ACK packet until the flush timeout of the first packet, cancel transmitting the packets of the first set and transmit the third packet from among the packets of the second set.

3. The electronic device of claim 2, wherein the instructions, when executed by the at least one processor individually and/or collectively, cause the electronic device to:
cancel transmitting the packets of the first set in accordance with discarding the second packet before the flush timeout of the first packet and discarding the first packet in response to the flush timeout of the first packet.

4. The electronic device of claim 2, wherein the instructions, when executed by the at least one processor individually and/or collectively, cause the electronic device to:
check, using a flush timeout value set with respect to the first packet, whether receiving the ACK packet before the flush timeout of the first packet.

5. The electronic device of claim 1, transmitting the one or more remaining packets of the first set is allowed on a condition that the ACK packet is received from the external electronic device.

6. The electronic device of claim 1, wherein the instructions, when executed by the at least one processor individually and/or collectively, cause the electronic device to:
based on not receiving the ACK packet from the external electronic device until the flush timeout of the first packet, transmit, by using the communication circuitry, through the communication link to the external electronic device, a packet that has a sequence number of the first packet, has a length of 0, and replaces the first packet; and
based on receiving the ACK packet for the packet through the communication link from the external electronic device, transmit the third packet with a sequence number different from the sequence number of the first packet from among the packets of the second set.

7. The electronic device of claim 6, wherein a logical link identifier (LLID) code in a payload header of the packet is '0b01'.

8. The electronic device of claim 1, wherein the instructions, when executed by the at least one processor individually and/or collectively, cause the electronic device to:
before the first packet is transmitted, transmit, by using the communication circuitry, through the communication link to the external electronic device, at least one of information regarding a codec used for generating the packets of the first set, information regarding a number of the packets of the first set, information regarding a bit rate used for respectively generating the packets of the first set, or information regarding the time.

9. The electronic device of claim 8, wherein a bit rate for a service data unit (SDU) used for generating the first packet is identical to a bit rate for a second SDU used for generating the third packet.

10. The electronic device of claim 1, wherein a flush timeout value of the second packet is less than a flush timeout value of the first packet.

11. The electronic device of claim 1, wherein the one or more remaining packets of the first set are usable for enhancing a quality of the first audio outputted through the external electronic device.

12. The electronic device o claim 1, wherein each of the packets of the first set and the packets of the second set is for outputting each of the first audio and the second audio by using the external electronic device through an advanced audio distribution profile (A2DP).

13. The electronic device of claim 1, wherein the communication link comprises an asynchronous connection-less (ACL) link.

14. A method executed in an electronic device, the method comprising:
first transmitting, by using communication circuitry of the electronic device, from among packets of a first set to be sequentially transmitted for an output of first audio through a communication link between the electronic device and an external electronic device to the external electronic device, a first packet including data mandatory for the output of the first audio,
based on receiving, before a flush timeout of the first packet, an acknowledgement (ACK) packet regarding the first packet from the external electronic device, transmitting, by using the communication circuitry, from among one or more remaining packets of the first set, a second packet including data optional for the output of the first audio, and
based on not receiving, until the flush timeout of the first packet, the ACK packet from the external electronic device:
canceling to transmit the packets of the first set; and
transmitting, by using the communication circuitry, from among packets of a second set to be sequentially transmitted for an output of second audio next to the first audio through the communication link to the external electronic device, a third packet including data mandatory for the output of the second audio.

15. A non-transitory computer readable storage medium storing one or more programs, the one or more programs comprising instructions to, when executed by an electronic device including communication circuitry for Bluetooth, cause the electronic device to:
first transmit, by using the communication circuitry, from among packets of a first set to be sequentially transmitted for an output of first audio through a communication link between the electronic device and an external electronic device to the external electronic device, a first packet including data mandatory for the output of the first audio,
based on receiving, before a flush timeout of the first packet, an acknowledgement (ACK) packet regarding the first packet from the external electronic device, transmit, by using the communication circuitry, from among one or more remaining packets of the first set, a second packet including data optional for the output of the first audio, and
based on not receiving, until the flush timeout of the first packet, the ACK packet from the external electronic device:
cancel transmitting the packets of the first set; and
transmit, by using the communication circuitry, from among packets of a second set to be sequentially transmitted for an output of second audio next to the first audio through the communication link to the external electronic device, a third packet including data mandatory for the output of the second audio.
